(19) **Europäisches Patentamt / European Patent Office / Office européen des brevets**

(11) **EP 4 398 128 A1**

(12) **EUROPEAN PATENT APPLICATION**
published in accordance with Art. 153(4) EPC

(43) Date of publication:
**10.07.2024 Bulletin 2024/28**

(21) Application number: **22875060.0**

(22) Date of filing: **29.09.2022**

(51) International Patent Classification (IPC):
**G06F 16/9535** (2019.01)    **G06N 3/08** (2023.01)

(52) Cooperative Patent Classification (CPC):
**G06F 16/9535; G06N 3/0464; G06N 3/08; G06N 3/084; G06Q 30/0601**

(86) International application number:
**PCT/CN2022/122528**

(87) International publication number:
**WO 2023/051678 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2021 CN 202111152705**

(71) Applicant: **Huawei Technologies Co., Ltd.**
**Shenzhen, Guangdong 518129 (CN)**

(72) Inventors:
• **WANG, Yichao**
  **Shenzhen, Guangdong 518129 (CN)**
• **CHEN, Bo**
  **Shenzhen, Guangdong 518129 (CN)**
• **TANG, Ruiming**
  **Shenzhen, Guangdong 518129 (CN)**
• **HE, Xiuqiang**
  **Shenzhen, Guangdong 518129 (CN)**
• **ZHENG, Hongkun**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **RECOMMENDATION METHOD AND RELATED DEVICE**

(57)    This application discloses an information recommendation method, which may be applied to the field of artificial intelligence. The method includes: obtaining a target feature vector; and processing the target feature vector by using a recommendation model, to obtain recommendation information, where the recommendation model includes a cross network, a deep network, and a target network; the target network is used to perform fusion processing on a first intermediate output that is output by the first cross layer and a second intermediate output that is output by the first deep layer, to obtain a first fusion result, and the target network is further used to: process the first fusion result to obtain a first weight corresponding to the first cross layer and a second weight corresponding to the first deep layer, and weight the first fusion result with the first weight and the second weight separately, to obtain a first intermediate input and a second intermediate input. In this application, the target network learns heterogeneous parameter distribution for different interaction networks, to avoid excessive sharing, and introduces interaction signals between different interaction networks. This improves prediction accuracy of the model.

Obtain a target feature vector, where the target feature vector is obtained by performing feature extraction on attribute information of both a target user and a target article — 501

Process the target feature vector by using a recommendation model, to obtain recommendation information, where the recommendation information indicates a probability that the target user selects the target article, the recommendation model includes a cross network, a deep network, and a target network, the cross network includes a first cross layer and a second cross layer, and the deep network includes a first deep layer and a second deep layer; the target network is used to perform fusion processing on a first intermediate output that is output by the first cross layer and a second intermediate output that is output by the first deep layer, to obtain a first fusion result, and the target network is further used to: process the first fusion result to obtain a first weight corresponding to the first cross layer and a second weight corresponding to the first deep layer, and weight the first fusion result with the first weight and the second weight separately, to obtain a first intermediate input and a second intermediate input; and the first intermediate input is input data of the second cross layer, and the second intermediate input is input data of the second deep layer — 502

When the recommendation information meets a preset condition, determine to recommend the target article to the target user — 503

FIG. 5

**Description**

This application claims priority to Chinese Patent Application No. 202111152705.1, filed with the China National Intellectual Property Administration on September 29, 2021 and entitled "RECOMMENDATION METHOD AND RELATED APPARATUS", which is incorporated herein by reference in its entirety.

**TECHNICAL FIELD**

This application relates to the field of artificial intelligence, and in particular, to a recommendation method and a related apparatus.

**BACKGROUND**

Artificial intelligence (artificial intelligence, AI) is a theory, a method, a technology, and an application system that simulates, extends, and expands human intelligence by using a digital computer or a machine controlled by a digital computer, to perceive an environment, obtain knowledge, and achieve an optimal result based on the knowledge. In other words, artificial intelligence is a branch of computer science and attempts to understand essence of intelligence and produce a new intelligent machine that can react in a similar manner to human intelligence. Artificial intelligence is to research design principles and implementations of various intelligent machines, so that the machines have perception, inference, and decision-making functions.

Selection rate prediction is to predict a probability that a user selects a specific article in a specific environment. For example, in a recommendation system of an application such as an application store or online advertising, selection rate prediction plays a key role. Selection rate prediction can maximize enterprise benefits and improve user satisfaction. The recommendation system needs to consider both an article selection rate by a user and an article bid price. The selection rate is predicted by the recommendation system based on historical behavior of the user, and the article bid price represents system income that is obtained after the article is selected/downloaded. For example, one function may be constructed, the function may be used to obtain one function value through calculation based on a predicted user selection rate and the article bid price, and the recommendation system arranges articles in descending order based on the function value.

To improve a personalized degree of the recommendation system and predict a list of articles that meet user preference, the recommendation system usually interacts with features from different perspectives, such as a user feature, a commodity feature, and a context feature, to capture user preference. Common feature interaction manners in the industry are classified into two types: a stack structure (stacked structure), and a parallel structure (parallel structure).

The parallel structure may include a cross network (cross network) and a deep network (deep network). The cross network may be referred to as an explicit interaction network (explicit component). The deep network may be referred to as an implicit interaction network (implicit component). In an existing implementation, both the cross network (cross network) and the deep network (deep network) use a feature vector output by an embedding layer (embedding layer) as an input, independently process data (in other words, only separately perform a data interaction process), and do not interact with each other. The two networks are fused and output at a final output layer (output layer). Typical models include Wide & Deep, DCN, xDeepFM, and the like.

In a current parallel interaction model, parallel networks do not share any information in their respective interaction processes, and fusion is performed only at a final output layer, which may be referred to as late fusion (late fusion). This manner ignores a synergistic function between different feature interaction manners. In addition, data input between the parallel networks is the same, and heterogeneity of features for different interaction manners is ignored, that is, different features bring different amounts of information to different interaction manners. Consequently, data processing accuracy of the model is poor.

**SUMMARY**

According to a first aspect, this application provides a recommendation method. The method includes: obtaining a target feature vector, where the target feature vector is obtained by performing feature extraction on attribute information of both a target user and a target article.

The attribute information of the target user may be an attribute related to a preference feature of the user, and may be at least one of a gender, an age, an occupation, income, a hobby, and an education degree. The gender may be male or female. The age may be a number ranging from 0 to 100. The occupation may be teacher, programmer, chef, or the like. The hobby may be basketball, tennis, or running. The education degree may be elementary school, junior high school, high school, university, and the like. This application does not limit a specific type of the attribute information of the target user.

The article may be a physical article or a virtual article, for example, may be an article such as an app, audio and a video, a web page, or news. The attribute information of the article may be at least one of an article name, a developer, an installation package size, a category, and a good rating. For example, the article is an application. The category of the article may be chat, parkour game, office, or the like. The good rating may be a score, a comment, or the like for the article. A specific type of the attribute information of the article is not limited in this application.

The target feature vector is processed by using a recommendation model, to obtain recommendation information. The recommendation information indicates a probability that the target user selects the target article. The recommendation model includes a cross network (cross network), a deep network (deep network), and a target network. The cross network includes a first cross layer (cross layer) and a second cross layer. The deep network includes a first deep layer (deep layer) and a second deep layer. The target network is used to perform fusion processing on a first intermediate output that is output by the first cross layer and a second intermediate output that is output by the first deep layer, to obtain a first fusion result. The target network is further used to: process the first fusion result to obtain a first weight corresponding to the first cross layer and a second weight corresponding to the first deep layer, and weight the first fusion result with the first weight and the second weight separately, to obtain a first intermediate input and a second intermediate input. The first intermediate input is input data of the second cross layer, and the second intermediate input is input data of the second deep layer.

The target network in this embodiment of this application may implement data exchange between a network layer of the cross network and a network layer of the deep network. Specifically, the cross network may include a plurality of cross layers, and the deep network may include a plurality of deep layers. Optionally, a quantity of cross layers in the cross network and a quantity of deep layers in the deep network are consistent (or are inconsistent, but there is a position correspondence).

For example, when the quantity of cross layers in the cross network is consistent with the quantity of deep layers in the deep network, a cross layer and a deep layer at a same position are in a one-to-one correspondence. For example, the cross network may include a cross layer 1, a cross layer 2, a cross layer 3, a cross layer 4, and a cross layer 5, and the deep network may include a deep layer 1, a deep layer 2, a deep layer 3, a deep layer 4, and a deep layer 5. In this case, the cross layer 1 corresponds to the deep layer 1, the cross layer 2 corresponds to the deep layer 2, the cross layer 3 corresponds to the deep layer 3, the cross layer 4 corresponds to the deep layer 4, and the cross layer 5 corresponds to the deep layer 5.

For example, when the quantity of cross layers in the cross network is inconsistent with the quantity of deep layers in the deep network, a cross layer in the cross network and a deep layer in the deep network that are in a same relative position are in a one-to-one correspondence. For example, the cross network may include a cross layer 1, a cross layer 2, and a cross layer 3, and the deep network may include a deep layer 1, a deep layer 2, a deep layer 3, a deep layer 4, a deep layer 5, and a deep layer 6. In this case, the cross layer 1 corresponds to the deep layer 1 and the deep layer 2, the cross layer 2 corresponds to the deep layer 3 and the deep layer 4, and the cross layer 3 corresponds to the deep layer 5 and the deep layer 6.

In a possible implementation, the cross network may include a first cross layer (cross layer) and a second cross layer, and the deep network includes a first deep layer (deep layer) and a second deep layer. Each of the first cross layer and the second cross layer may be any adjacent network layer in the cross network. Each of the first deep layer and the second deep layer may be any adjacent network layer in the deep network. The first cross layer may correspond to the first deep layer, and the second cross layer may correspond to the second deep layer. For example, when the quantity of cross layers in the cross network is consistent with the quantity of deep layers in the deep network, the first cross layer may be a cross layer 1, the first deep layer may be a deep layer 1, the second cross layer may be a cross layer 2, and the second deep layer may be a deep layer 2. For example, when the quantity of cross layers in the cross network is inconsistent with the quantity of deep layers in the deep network, the first cross layer may be a cross layer 1, the first deep layer may be a deep layer 1 and a deep layer 2, the second cross layer may be a cross layer 2, and the second deep layer may be a deep layer 3 and a deep layer 4.

The target network is used to perform fusion processing on the first intermediate output that is output by the first cross layer and the second intermediate output that is output by the first deep layer, to obtain the first fusion result.

When the recommendation information meets a preset condition, it is determined to recommend the target article to the target user.

In this embodiment of this application, the target network may fuse an output of the cross layer in the cross network and an output of the deep layer in the deep network, and perform weight-based adaptation. This implements data exchange between the cross network and the deep network, and improves data processing accuracy of the recommendation model.

In a possible implementation, the fusion processing includes one of point-wise addition (point-wise addition), Hadamard product, concatenation, and attention mechanism based pooling.

An input of the first cross layer may be a plurality of embedding vectors (or referred to as feature vectors). The first intermediate output that is output by the first cross layer may be a plurality of embedding vectors. An input of the first deep layer may be a plurality of embedding vectors. The second intermediate output that is output by the first deep layer may be a plurality of embedding vectors. Therefore, fusion processing may be performed on the plurality of embedding vectors output by the first cross layer and the plurality of embedding vectors output by the first deep layer, for example, point-wise addition, Hadamard product, concatenation, and attention mechanism based pooling. In a possible implementation, the first intermediate output includes M first feature vectors, the second intermediate output includes M second feature vectors, and the first fusion result includes M third feature vectors.

The target network is further used to: process the first fusion result to obtain the first weight corresponding to the first cross layer and the second weight corresponding to the first deep layer, and weight the first fusion result with the first weight and the second weight separately, to obtain the first intermediate input corresponding to the first cross layer and the second intermediate input corresponding to the first deep layer.

In a possible implementation, the target network may include a first feature adaptation network. The first feature adaptation network is a fully-connected network, a squeeze-and-excitation network (squeeze-and-excitation network), an attention network, an SENet, or a gatenet (gatenet). For descriptions of the first feature adaptation network, refer to the descriptions of the third feature adaptation network in the foregoing embodiment. Details are not described herein again. Then, the target network may process the first fusion result by using the first feature adaptation network.

In a possible implementation, the first intermediate output includes M first feature vectors, the second intermediate output includes M second feature vectors, and the first fusion result includes M third feature vectors. The first weight includes a first weight value corresponding to each first feature vector. The second weight includes a second weight value corresponding to each second feature vector. After the first weight and the second weight are obtained, each first feature vector of the M third feature vectors may be weighted with the corresponding first weight value, and each second feature vector of the M third feature vectors may be weighted with the corresponding second weight value.

The first fusion result may include the M third feature vectors. The first weight may include first weight values corresponding to all the third feature vectors. Optionally, the first weight values corresponding to all the third feature vectors may be the same or different. Similarly, the second weight may include second weight values corresponding to all the third feature vectors. Optionally, the second weight values corresponding to all the third feature vectors may be the same or different.

In a possible implementation, the cross network further includes a third cross layer, and the deep network further includes a third deep layer. The target network is further used to perform fusion processing on a third intermediate output that is output by the second cross layer and a fourth intermediate output that is output by the second deep layer, to obtain a second fusion result. The target network is further used to: process the second fusion result to obtain a third weight corresponding to the second cross layer and a fourth weight corresponding to the second deep layer, and weight the second fusion result with the third weight and the fourth weight separately, to obtain a third intermediate input corresponding to the second cross layer and a fourth intermediate input corresponding to the second deep layer. The third cross layer is configured to process the third intermediate input, and the third deep layer is configured to process the fourth intermediate input.

In a possible implementation, the target network includes a second feature adaptation network, and the second feature adaptation network is a fully-connected network, a squeeze-and-excitation network (squeeze-and-excitation network), an attention network, an SENet, or a gatenet (gatenet).

The processing the second fusion result includes:
processing the second fusion result by using the second feature adaptation network.

In a possible implementation, after concatenation is performed on each embedding vector, a concatenation result may not be used as an input of each of the cross network and the deep network. However, the input of each of the cross network and the deep network may be obtained based on a trained network that may learn weight distribution of the feature in both the cross network and the deep network and adjust the concatenation result based on the weight distribution.

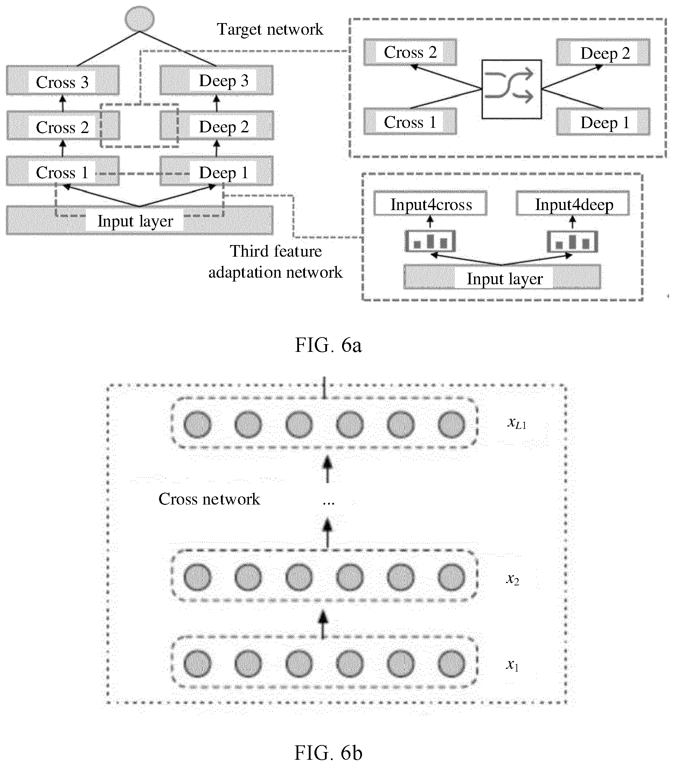

In a possible implementation, refer to FIG. 6a. The network may be a third feature adaptation network. Optionally, the third feature adaptation network may include two sub-networks. One sub-network corresponds to the cross network, and one sub-network corresponds to the deep network. It is equivalent to configuring a feature adaptation module for each feature interaction network (that is, the cross network and the deep network), to learn weight distribution of the feature in each interaction network.

In a possible implementation, a third feature adaptation network may be a fully-connected network, a squeeze-and-excitation network (squeeze-and-excitation network), an attention network, an SENet, or a gatenet (gatenet). The third feature adaptation network may include two sub-networks. One sub-network corresponds to the cross network, and one sub-network corresponds to the deep network. The sub-network may be a fully-connected network, a squeeze-and-excitation network (squeeze-and-excitation network), an attention network, an SENet, or a gatenet (gatenet).

Specifically, feature extraction may be performed on attribute information of each of the target user and the target user based on an embedding layer, to obtain an embedding vector corresponding to each attribute information. A concatenation (concat) operation may be performed on each embedding vector, to obtain an initial feature vector. The initial feature vector is processed by using the third feature adaptation network, to obtain a fifth weight corresponding to the cross network and a sixth weight corresponding to the deep network. The sub-network corresponding to the cross network may process the initial feature vector, to obtain the fifth weight corresponding to the cross network. The sub-network corresponding to the deep network may process the initial feature vector, to obtain the sixth weight corresponding to the deep network.

The initial feature vector may include a plurality of embedded vectors, and the fifth weight may include weight values corresponding to all the embedded vectors. Optionally, the weight values corresponding to all the embedded vectors may be the same or different. Similarly, the sixth weight may include weight values corresponding to all the embedded vectors. Optionally, the weight values corresponding to all the embedded vectors may be the same or different.

In a possible implementation, the initial feature vector may be weighted with the fifth weight and the sixth weight separately, to obtain a first network input corresponding to the cross network and a second network input corresponding to the deep network. The first network input is used as an input of the cross network, and the second network input is used as an input of the deep network. It is equivalent to that a third feature adaptation network is introduced between an input layer and a feature interaction layer (that is, the cross network and the deep network). The third feature adaptation network may include two sub-networks. One sub-network corresponds to the cross network, and one sub-network corresponds to the deep network. It is equivalent to configuring a feature adaptation module for each feature interaction network (that is, the cross network and the deep network), to learn weight distribution of the feature in each interaction network. Then, the calibrated feature (that is, the first network input and the second network input) is separately input to the cross network and deep network.

In this embodiment of this application, the third feature adaptation network may learn heterogeneous parameter distribution for different interaction networks, to avoid excessive sharing. Further, the first network input is used as the input of the cross network, and the second network input is used as the input of the deep network, so that data processing accuracy of the recommendation model can be improved.

In a possible implementation, the user attribute includes at least one of the following: a gender, an age, an occupation, income, a hobby, and an education degree.

In a possible implementation, the article attribute includes at least one of the following: an article name, a developer, an installation package size, a category, and a good rating.

According to a second aspect, this application provides a model training method. The method includes:

obtaining a target feature vector, where the target feature vector is obtained by performing feature extraction on attribute information of both a target user and a target article;

processing the target feature vector by using a first recommendation model, to obtain recommendation information, where the recommendation information indicates a probability that the target user selects the target article, the recommendation model includes a cross network (cross network), a deep network (deep network), and a target network, the cross network includes a first cross layer (cross layer) and a second cross layer, and the deep network includes a first deep layer (deep layer) and a second deep layer; the target network is used to perform fusion processing on a first intermediate output that is output by the first cross layer and a second intermediate output that is output by the first deep layer, to obtain a first fusion result, and the target network is further used to: process the first fusion result to obtain a first weight corresponding to the first cross layer and a second weight corresponding to the first deep layer, and weight the first fusion result with the first weight and the second weight separately, to obtain a first intermediate input and a second intermediate input; and the first intermediate input is input data of the second cross layer, and the second intermediate input is input data of the second deep layer; and

determining a loss based on the recommendation information and an actual selection result of the target user for the target article, and updating the first recommendation model based on the loss, to obtain a second recommendation model.

In a possible implementation, the fusion processing includes one of point-wise addition (point-wise addition), Hadamard product, concatenation, and attention mechanism based pooling.

In a possible implementation, the target network includes a first feature adaptation network, and the first feature adaptation network is a fully-connected network, a squeeze-and-excitation network (squeeze-and-excitation network), an attention network, an SENet, or a gatenet (gatenet).

The processing the first fusion result includes:

processing the first fusion result by using the first feature adaptation network.

In a possible implementation, the first intermediate output includes M first feature vectors, the second intermediate output includes M second feature vectors, and the first fusion result includes M third feature vectors. The first weight includes a first weight value corresponding to each first feature vector. The second weight includes a second weight value corresponding to each second feature vector.

The weighting the first fusion result with the first weight and the second weight separately includes:

5

weighting each first feature vector of the M third feature vectors with a corresponding first weight value; and weighting each second feature vector of the M third feature vectors with a corresponding second weight value.

In a possible implementation, the cross network further includes a third cross layer, and the deep network further includes a third deep layer. The target network is further used to perform fusion processing on a third intermediate output that is output by the second cross layer and a fourth intermediate output that is output by the second deep layer, to obtain a second fusion result. The target network is further used to: process the second fusion result to obtain a third weight corresponding to the second cross layer and a fourth weight corresponding to the second deep layer, and weight the second fusion result with the third weight and the fourth weight separately, to obtain a third intermediate input corresponding to the second cross layer and a fourth intermediate input corresponding to the second deep layer. The third cross layer is configured to process the third intermediate input, and the third deep layer is configured to process the fourth intermediate input.

In a possible implementation, the target network includes a second feature adaptation network, and the second feature adaptation network is a fully-connected network, a squeeze-and-excitation network (squeeze-and-excitation network), an attention network, an SENet, or a gatenet (gatenet).

The processing the second fusion result includes:

processing the second fusion result by using the second feature adaptation network.

In a possible implementation, the target feature vector includes a first network input and a second network input.

The obtaining a target feature vector includes:

obtaining an initial feature vector, where the initial feature vector is obtained by performing feature extraction on the attribute information of both the target user and the target article; and
processing the initial feature vector by using a third feature adaptation network, to obtain a fifth weight corresponding to the cross network and a sixth weight corresponding to the deep network, and weighting the initial feature vector with the fifth weight and the sixth weight separately, to obtain a first network input corresponding to the cross network and a second network input corresponding to the deep network, where the first network input is used as an input of the cross network, and the second network input is used as an input of the deep network.

The updating the first recommendation model based on the loss, to obtain a second recommendation model includes:

updating the first recommendation model and the second feature adaptation network based on the loss, to obtain the second recommendation model and the updated second feature adaptation network.

In a possible implementation, the third feature adaptation network is a fully-connected network, a squeeze-and-excitation network, an attention network, an SENet or a gatenet.

In a possible implementation, the user attribute includes at least one of the following: a gender, an age, an occupation, income, a hobby, and an education degree.

In a possible implementation, the article attribute includes at least one of the following: an article name, a developer, an installation package size, a category, and a good rating.

According to a third aspect, this application provides a recommendation apparatus. The apparatus includes:

an obtaining module, configured to obtain a target feature vector, where the target feature vector is obtained by performing feature extraction on attribute information of both a target user and a target article;
a data processing module, configured to process the target feature vector by using a recommendation model, to obtain recommendation information, where the recommendation information indicates a probability that the target user selects the target article, the recommendation model includes a cross network (cross network), a deep network (deep network), and a target network, the cross network includes a first cross layer (cross layer) and a second cross layer, and the deep network includes a first deep layer (deep layer) and a second deep layer; the target network is used to perform fusion processing on a first intermediate output that is output by the first cross layer and a second intermediate output that is output by the first deep layer, to obtain a first fusion result, and the target network is further used to: process the first fusion result to obtain a first weight corresponding to the first cross layer and a second weight corresponding to the first deep layer, and weight the first fusion result with the first weight and the second weight separately, to obtain a first intermediate input and a second intermediate input; and the first intermediate input is input data of the second cross layer, and the second intermediate input is input data of the second deep layer; and
a recommendation module, configured to: when the recommendation information meets a preset condition, determine to recommend the target article to the target user.

In a possible implementation, the fusion processing includes one of point-wise addition (point-wise addition), Hadamard product, concatenation, and attention mechanism based pooling.

In a possible implementation, the target network includes a first feature adaptation network, and the first feature adaptation network is a fully-connected network, a squeeze-and-excitation network (squeeze-and-excitation network), an attention network, an SENet, or a gatenet (gatenet).

The data processing module is specifically configured to:
process the first fusion result by using the first feature adaptation network.

In a possible implementation, the first intermediate output includes M first feature vectors, the second intermediate output includes M second feature vectors, and the first fusion result includes M third feature vectors. The first weight includes a first weight value corresponding to each first feature vector. The second weight includes a second weight value corresponding to each second feature vector.

The data processing module is specifically configured to:

weight each first feature vector of the M third feature vectors with a corresponding first weight value; and
weight each second feature vector of the M third feature vectors with a corresponding second weight value.

In a possible implementation, the cross network further includes a third cross layer, and the deep network further includes a third deep layer. The target network is further used to perform fusion processing on a third intermediate output that is output by the second cross layer and a fourth intermediate output that is output by the second deep layer, to obtain a second fusion result. The target network is further used to: process the second fusion result to obtain a third weight corresponding to the second cross layer and a fourth weight corresponding to the second deep layer, and weight the second fusion result with the third weight and the fourth weight separately, to obtain a third intermediate input corresponding to the second cross layer and a fourth intermediate input corresponding to the second deep layer. The third cross layer is configured to process the third intermediate input, and the third deep layer is configured to process the fourth intermediate input.

In a possible implementation, the target network includes a second feature adaptation network, and the second feature adaptation network is a fully-connected network, a squeeze-and-excitation network (squeeze-and-excitation network), an attention network, an SENet, or a gatenet (gatenet).

The data processing module is specifically configured to:
process the second fusion result by using the second feature adaptation network.

In a possible implementation, the target feature vector includes a first network input and a second network input.

The obtaining module is specifically configured to:

obtain an initial feature vector, where the initial feature vector is obtained by performing feature extraction on the attribute information of both the target user and the target article; and
process the initial feature vector by using a third feature adaptation network, to obtain a fifth weight corresponding to the cross network and a sixth weight corresponding to the deep network, and weight the initial feature vector with the fifth weight and the sixth weight separately, to obtain a first network input corresponding to the cross network and a second network input corresponding to the deep network, where the first network input is used as an input of the cross network, and the second network input is used as an input of the deep network.

In a possible implementation, the third feature adaptation network is a fully-connected network, a squeeze-and-excitation network, an attention network, an SENet or a gatenet.

In a possible implementation, the user attribute includes at least one of the following: a gender, an age, an occupation, income, a hobby, and an education degree.

The article attribute includes at least one of the following: an article name, a developer, an installation package size, a category, and a good rating.

According to a fourth aspect, this application provides a model training apparatus. The apparatus includes:

an obtaining module, configured to obtain a target feature vector, where the target feature vector is obtained by performing feature extraction on attribute information of both a target user and a target article;
a data processing module, configured to process the target feature vector by using a first recommendation model, to obtain recommendation information, where the recommendation information indicates a probability that the target user selects the target article, the recommendation model includes a cross network (cross network), a deep network (deep network), and a target network, the cross network includes a first cross layer (cross layer) and a second cross layer, and the deep network includes a first deep layer (deep layer) and a second deep layer; the target network is used to perform fusion processing on a first intermediate output that is output by the first cross layer and a second intermediate output that is output by the first deep layer, to obtain a first fusion result, and the target network is further used to: process the first fusion result to obtain a first weight corresponding to the first cross layer and a second weight corresponding to the first deep layer, and weight the first fusion result with the first weight and the second weight separately, to obtain a first intermediate input and a second intermediate input; and the first intermediate input is input data of the second cross layer, and the second intermediate input is input data of the second deep layer; and

a model training module, configured to: determine a loss based on the recommendation information and an actual selection result of the target user for the target article, and updating the first recommendation model based on the loss, to obtain a second recommendation model.

In a possible implementation, the fusion processing includes one of point-wise addition (point-wise addition), Hadamard product, concatenation, and attention mechanism based pooling.

In a possible implementation, the target network includes a first feature adaptation network, and the first feature adaptation network is a fully-connected network, a squeeze-and-excitation network (squeeze-and-excitation network), an attention network, an SENet, or a gatenet (gatenet).

The data processing module is specifically configured to:

process the first fusion result by using the first feature adaptation network.

In a possible implementation, the first intermediate output includes M first feature vectors, the second intermediate output includes M second feature vectors, and the first fusion result includes M third feature vectors. The first weight includes a first weight value corresponding to each first feature vector. The second weight includes a second weight value corresponding to each second feature vector.

The data processing module is specifically configured to:

weight each first feature vector of the M third feature vectors with a corresponding first weight value; and weight each second feature vector of the M third feature vectors with a corresponding second weight value.

In a possible implementation, the cross network further includes a third cross layer, and the deep network further includes a third deep layer. The target network is further used to perform fusion processing on a third intermediate output that is output by the second cross layer and a fourth intermediate output that is output by the second deep layer, to obtain a second fusion result. The target network is further used to: process the second fusion result to obtain a third weight corresponding to the second cross layer and a fourth weight corresponding to the second deep layer, and weight the second fusion result with the third weight and the fourth weight separately, to obtain a third intermediate input corresponding to the second cross layer and a fourth intermediate input corresponding to the second deep layer. The third cross layer is configured to process the third intermediate input, and the third deep layer is configured to process the fourth intermediate input.

In a possible implementation, the target network includes a second feature adaptation network, and the second feature adaptation network is a fully-connected network, a squeeze-and-excitation network (squeeze-and-excitation network), an attention network, an SENet, or a gatenet (gatenet).

The data processing module is specifically configured to:

process the second fusion result by using the second feature adaptation network.

In a possible implementation, the target feature vector includes a first network input and a second network input.

The obtaining module is specifically configured to:

obtain an initial feature vector, where the initial feature vector is obtained by performing feature extraction on the attribute information of both the target user and the target article; and

process the initial feature vector by using a third feature adaptation network, to obtain a fifth weight corresponding to the cross network and a sixth weight corresponding to the deep network, and weight the initial feature vector with the fifth weight and the sixth weight separately, to obtain a first network input corresponding to the cross network and a second network input corresponding to the deep network, where the first network input is used as an input of the cross network, and the second network input is used as an input of the deep network.

The model training module is specifically configured to:

update the first recommendation model and the second feature adaptation network based on the loss, to obtain the second recommendation model and the updated second feature adaptation network.

In a possible implementation, the third feature adaptation network is a fully-connected network, a squeeze-and-excitation network, an attention network, an SENet or a gatenet.

In a possible implementation, the user attribute includes at least one of the following: a gender, an age, an occupation, income, a hobby, and an education degree.

In a possible implementation, the article attribute includes at least one of the following: an article name, a developer, an installation package size, a category, and a good rating.

According to a fifth aspect, an embodiment of this application provides a recommendation apparatus, which may include a memory, a processor, and a bus system. The memory is configured to store a program, and the processor is configured to execute the program in the memory, to perform the method according to the possible implementations of the first aspect.

According to a sixth aspect, an embodiment of this application provides a training apparatus, which may include a memory, a processor, and a bus system. The memory is configured to store a program, and the processor is configured to execute the program in the memory, to perform the method according to the possible implementations of the second aspect.

According to a seventh aspect, an embodiment of this application provides a computer-readable storage medium. The computer-readable storage medium stores a computer program, and when the computer program is run on a computer, the computer is enabled to perform the method according to any one of the first aspect and the possible implementations of the first aspect, or any one of the second aspect and the possible implementations of the second aspect.

According to an eighth aspect, an embodiment of this application provides a computer program product, including code. When the code is executed, the method according to any one of the first aspect and the possible implementations of the first aspect, or any one of the second aspect and the possible implementations of the second aspect is performed.

According to a ninth aspect, this application provides a chip system. The chip system includes a processor. The processor is configured to support an execution device or a training device in implementing the functions in the foregoing aspects, for example, sending or processing the data or information in the foregoing method. In a possible design, the chip system further includes a memory. The memory is configured to store program instructions and data that are necessary for the execution device or the training device. The chip system may include a chip, or may include a chip and another discrete component.

An embodiment of this application provides a recommendation method. The method includes: obtaining a target feature vector, where the target feature vector is obtained by performing feature extraction on attribute information of both a target user and a target article; processing the target feature vector by using a recommendation model, to obtain recommendation information, where the recommendation information indicates a probability that the target user selects the target article, the recommendation model includes a cross network (cross network), a deep network (deep network), and a target network, the cross network includes a first cross layer (cross layer) and a second cross layer, and the deep network includes a first deep layer (deep layer) and a second deep layer; the target network is used to perform fusion processing on a first intermediate output that is output by the first cross layer and a second intermediate output that is output by the first deep layer, to obtain a first fusion result, and the target network is further used to: process the first fusion result to obtain a first weight corresponding to the first cross layer and a second weight corresponding to the first deep layer, and weight the first fusion result with the first weight and the second weight separately, to obtain a first intermediate input and a second intermediate input; and the first intermediate input is input data of the second cross layer, and the second intermediate input is input data of the second deep layer; and when the recommendation information meets a preset condition, determining to recommend the target article to the target user. In this way, the target network learns heterogeneous parameter distribution for different interaction networks, to avoid excessive sharing, and introduces interaction signals between different interaction networks. This enhances a synergistic function of a multi-tower network and improves prediction accuracy of the model. The target network may fuse an output of the cross layer in the cross network and an output of the deep layer in the deep network, and perform weight-based adaptation. This implements data exchange between the cross network and the deep network, and improves data processing accuracy of the recommendation model.

**BRIEF DESCRIPTION OF DRAWINGS**

FIG. 1 is a schematic diagram of a structure of a main framework of artificial intelligence;
FIG. 2 is a schematic diagram of a system architecture according to an embodiment of this application;
FIG. 3 is a schematic diagram of a system architecture according to an embodiment of this application;
FIG. 4 is a schematic diagram of a recommendation flow scenario according to an embodiment of this application;
FIG. 5 is a schematic flowchart of a recommendation method according to an embodiment of this application;
FIG. 6a is a schematic diagram of a recommendation model;
FIG. 6b is a schematic diagram of a recommendation model;
FIG. 7 is a schematic diagram of a recommendation model;
FIG. 8 is a schematic diagram of a recommendation model;
FIG. 9 is a schematic diagram of a recommendation model;
FIG. 10 is a schematic flowchart of a model training method according to an embodiment of this application;

FIG. 11 is a schematic diagram of a structure of a recommendation apparatus according to an embodiment of this application;

FIG. 12 is a schematic diagram of a structure of a model training apparatus according to an embodiment of this application;

FIG. 13 is a schematic diagram of an execution device according to an embodiment of this application;

FIG. 14 is a schematic diagram of a training device according to an embodiment of this application; and

FIG. 15 is a schematic diagram of a chip according to an embodiment of this application.

## DESCRIPTION OF EMBODIMENTS

The following describes embodiments of this application with reference to the accompanying drawings in embodiments of this application. Terms used in implementations of this application are used to only explain embodiments of this application, with no intention to limit this application.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, and this is only a discrimination manner for describing objects having a same attribute in embodiments of this application. In addition, the terms "include", "contain", and any other variants mean to cover the non-exclusive inclusion, so that a process, method, system, product, or device that includes a series of units is not necessarily limited to those units, but may include other units not expressly listed or inherent to such a process, method, product, or device.

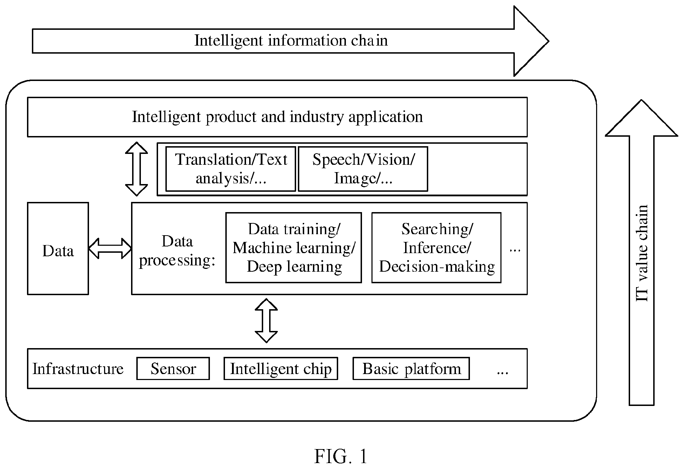

An overall working procedure of an artificial intelligence system is first described with reference to FIG. 1. FIG. 1 is a schematic diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to an information technology industry from an underlying infrastructure and information (providing and processing a technology implementation) of artificial intelligence to an industrial ecological process of a system.

(1) Infrastructure

The infrastructure provides computing capability support for an artificial intelligence system, implements communication with an external world, and implements support by using a basic platform. The infrastructure communicates with the outside by using a sensor. The computing capability is provided by an intelligent chip (a hardware acceleration chip such as a CPU, an NPU, a GPU, an ASIC, and an FPGA). The basic platform includes platform assurance and support related to a distributed computing framework and network, and the like. The basic platforms may include a cloud storage and computing network, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the field of artificial intelligence. The data relates to a graph, an image, a voice, and text, further relates to internet of things data of a conventional device, and includes service data of an existing system and sensing data such as a force, a displacement, a liquid level, a temperature, and humidity.

(3) Data processing

Data processing usually includes a manner such as data training, machine learning, deep learning, searching, inference, or decision-making.

Machine learning and deep learning may perform intelligent information modeling, extraction, preprocessing, and training of data through symbolization and formalization.

Inference means a process of simulating a human inference manner for machine thinking and problem-resolving by using formalized information based on an inference control policy in a computer system or an intelligent system. Atypical function is searching and matching.

Decision-making is a process of making a decision based on intelligent information after inference, and usually provides a function such as classification, sorting, and prediction.

(4) General capability

After data processing mentioned above is performed on data, some general capabilities may further be formed based on a data processing result, for example, an algorithm or a general system such as translation, text analysis, computer vision processing, speech recognition, and image recognition.

(5) Intelligent product and industry application

Intelligent product and industry applications means products and applications of the artificial intelligence system in various fields, and encapsulate an overall solution of artificial intelligence, to productize intelligent information decision-making and implement applications. Application fields mainly include intelligent terminals, intelligent transportation, intelligent healthcare, autonomous driving, smart cities, and the like.

Embodiments of this application may be applied to the field of information recommendation. The scenario includes but is not limited to a scenario related to e-commerce product recommendation, search engine result recommendation, application market recommendation, music recommendation, and video recommendation. A recommended article in various different application scenarios may also be referred to as "object" for ease of subsequent description. To be specific, in different recommendation scenarios, the recommended object may be an app, or a video, or music, or a commodity (for example, a presentation interface of an online shopping platform displays different commodities based on different users, which may also be presented by using a recommendation result of a recommendation model). These recommendation scenarios usually involve user behavior log collection, log data preprocessing (for example, quantization and sampling), sample set training and are intended for obtaining a recommendation model. An object (such as an app and music) involved in a scenario corresponding to a training sample item is analyzed and processed based on the recommendation model. For example, if a sample selected in a recommendation model training process is from operation behavior of a mobile application market user on a recommended app, the recommendation model obtained through training is applicable to a mobile app application market, or may be used for terminal app recommendation in an app application market of another type of terminal. The recommendation model finally calculates a recommendation probability or a score of each to-be-recommended object. A recommendation system selects a recommendation result based on a specific selection rule, sorts the recommendation result based on, for example, the recommendation probability or the score, and presents the recommendation result to a user by using a corresponding application or terminal device. The user performs an operation on an object in the recommendation result to generate a user behavior log, and the like.

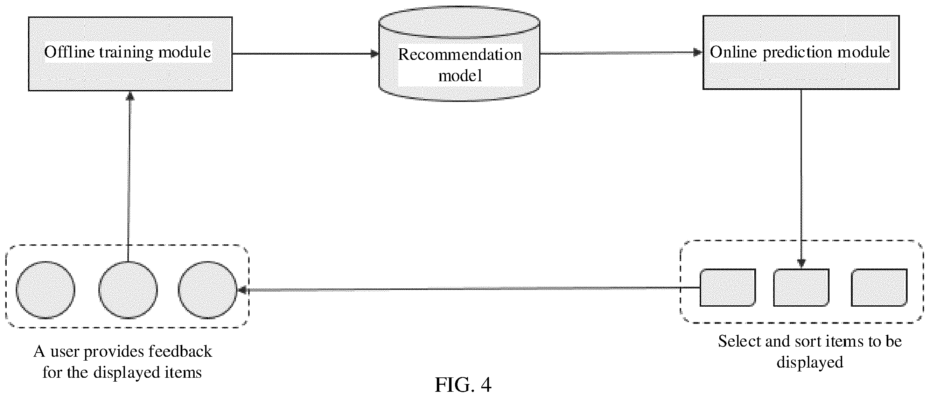

Refer to FIG. 4. In a recommendation process, when one user interacts with a recommendation system, a recommendation request is triggered. The recommendation system inputs the request and related feature information into a deployed recommendation model, and then predicts a click-through rate of the user for all candidate objects. Then, the candidate objects are sorted in descending order based on the predicted click-through rate, and the candidate objects are displayed in different positions in sequence as the recommendation result for the user. The user browses the displayed items and performs user behavior, such as browsing, clicking, and downloading. The user behavior is stored in a log as training data. An offline training module irregularly updates a parameter of the recommendation model, to improve recommendation effect of the model.

For example, the user may trigger a recommendation module of an application market by opening the application market of a mobile phone, and the recommendation module of the application market predicts, based on a historical download record of the user, a click record of the user, an application feature, and environment feature information such as time, and a place, a probability of downloading each candidate application by the user. Based on a prediction result, the application market displays applications in descending order based on the probability, improving an application download probability. Specifically, applications that are more likely to be downloaded are ranked higher, and applications that are less likely to be downloaded are ranked lower. The user behavior is also stored in the log, and the offline training module trains and updates the parameter of the prediction model.

For another example, in an application related to lifelong partner, a cognitive brain may be constructed by simulating a human brain mechanism, to establish a lifelong user learning system framework by using various models and algorithms based on historical data of the user in the domains such as videos, music, and news. The lifelong partner can record a past event of the user based on system data and application data, understand a current intention of the user, predict a future action or behavior of the user, and finally implement an intelligent service. In a current first phase, user behavior data (including information such as an SMS message, a photo, and an email event) is obtained based on a music app, a video app, and a browser app. A user image system is constructed. In addition, learning and memory modules based on user information filtering, association analysis, cross-domain recommendation, and causal reasoning are implemented, to construct a personal knowledge graph of the user.

The following describes an application architecture in embodiments of this application.

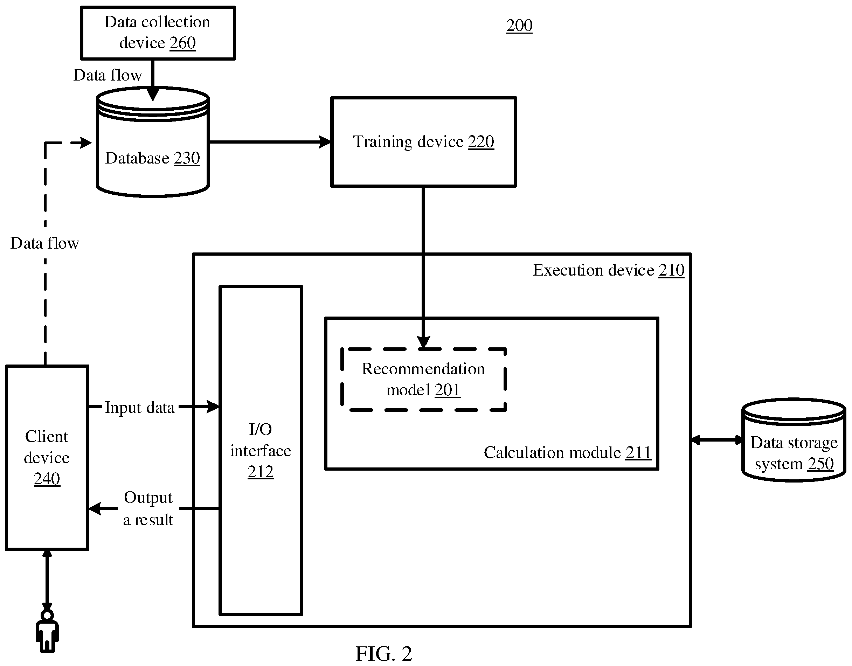

Refer to FIG. 2. An embodiment of this application provides a recommendation system architecture 200. A data collection device 260 is configured to collect a sample. One training sample may include a plurality of feature information (or described as attribute information, for example, a user attribute and an article attribute). There may be a plurality of types of feature information. The feature information may specifically include user feature information, object feature information, and a label feature. The user feature information represents a user feature, for example, a gender, an age, an occupation, or a hobby. The object feature information represents a feature of an object recommended to the user. Different recommendation systems correspond to different objects, and types of features that need to be extracted for different objects are also different. For example, an object feature extracted from a training sample of an app market may be a name (an identifier), a type, a size, or the like of an app. An object feature extracted from a training sample of an e-commerce app may be a name, a category, a price range, or the like of a commodity. The label feature indicates whether the sample is a positive sample or a negative sample. The label feature of the sample may usually be obtained based on information about an operation performed by the user on the recommended object. A sample in which the user performs an operation on the recommended object is a positive sample, and a sample in which the user performs no operation on the recommended object is a negative sample. For example, when the user clicks, or downloads, or purchases the recommended object, the label feature is 1, indicating that the sample is a positive sample, and if the user does not perform any operation on the recommended object, the label feature is 0, indicating that the sample is a negative sample. After the sample is collected, the sample may be stored in a database 230. Some or all feature information in the sample in the database 230 may also be directly obtained from a client device 240, for example, user feature information, operation information (used to determine a type identifier) of the user on the object, and object feature information (such as an object identifier). A training device 220 obtains a model parameter matrix based on sample training in the database 230, to generate a recommendation model 201. The following describes in more detail how the training device 220 performs training to obtain the model parameter matrix used to generate the recommendation model 201. The recommendation model 201 can be used to evaluate a large quantity of objects to obtain a score of each to-be-recommended object. Further, a specified quantity of objects or a preset quantity of objects may be recommended from an evaluation result of the large quantity of objects. A calculation module 211 obtains a recommendation result based on the evaluation result of the recommendation model 201, and recommends the recommendation result to the client device by using an I/O interface 212.

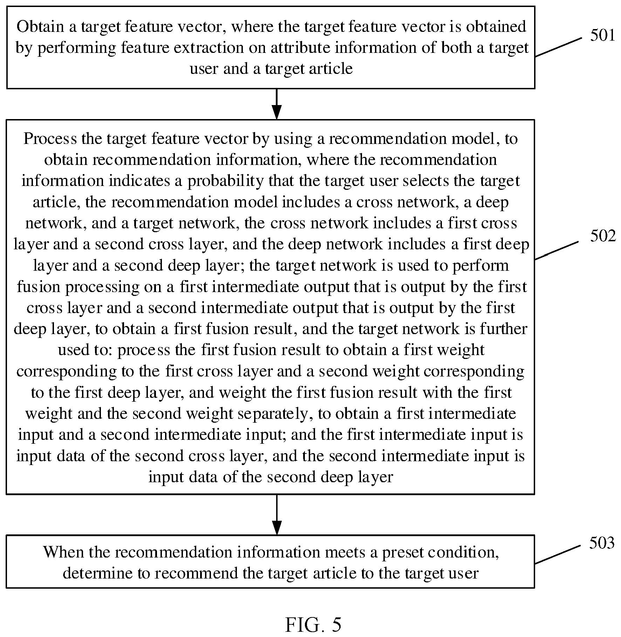

In this embodiment of this application, the training device 220 may select the positive sample and the negative sample from a sample set in the database 230, add the positive sample and the negative sample to a training set, and then train the samples in the training set by using the recommendation model, to obtain the trained recommendation model. For implementation details of the calculation module 211, refer to a detailed description of a method embodiment shown in FIG. 5.

After obtaining the model parameter matrix based on sample training to generate the recommendation model 201, the training device 220 sends the recommendation model 201 to an execution device 210, or directly sends the model parameter matrix to the execution device 210, and constructs the recommendation model in the execution device 210, to perform recommendation of a corresponding system. For example, a recommendation model obtained based on video-related sample training may be used to recommend a video to a user in a video website or app. A recommendation model obtained based on app-related sample training may be used to recommend an app to a user in an application market.

The execution device 210 is provided with the I/O interface 212, to exchange data with an external device. The execution device 210 may obtain the user feature information such as a user identifier, a user identity, a gender, an occupation, and a hobby from the client device 240 by using the I/O interface 212, and the information may be alternatively obtained from a system database. The recommendation model 201 recommends a target recommendation object to the user based on the user feature information and feature information of to-be-recommended objects. The execution device 210 may be disposed on a cloud server, or may be disposed on a user client.

The execution device 210 may invoke data, code, and the like in a data storage system 250, and may also store output data into the data storage system 250. The data storage system 250 may be disposed in the execution device 210, or may be disposed independently, or may be disposed in another network entity. There may be one or more data storage systems.

The calculation module 211 processes the user feature information and the feature information of the to-be-recommended objects by using the recommendation model 201. For example, the calculation module 211 analyzes and processes the user feature information and the feature information of the to-be-recommended objects by using the recommendation model 201, to obtain scores of the to-be-recommended objects, and sorts the to-be-recommended objects based on the scores. A higher-ranked object is used as an object recommended to the client device 240.

Finally, the I/O interface 212 returns the recommendation result to the client device 240, and presents the recommendation result to the user.

Furthermore, the training device 220 may generate corresponding recommendation models 201 for different objectives based on different sample feature information, to provide a better result for the user.

It should be noted that FIG. 2 is only a schematic diagram of a system architecture according to an embodiment of this application. A position relationship between devices, components, modules, and the like shown in the figure constitutes no limitation. For example, in FIG. 2, the data storage system 250 is an external memory relative to the execution device 210. In another case, the data storage system 250 may alternatively be disposed in the execution device 210.

In this embodiment of this application, the training device 220, the execution device 210, and the client device 240 may be three different physical devices. Alternatively, the training device 220 and the execution device 210 may be on a same physical device or one cluster. Alternatively, the execution device 210 and the client device 240 may be on a same physical device or one cluster.

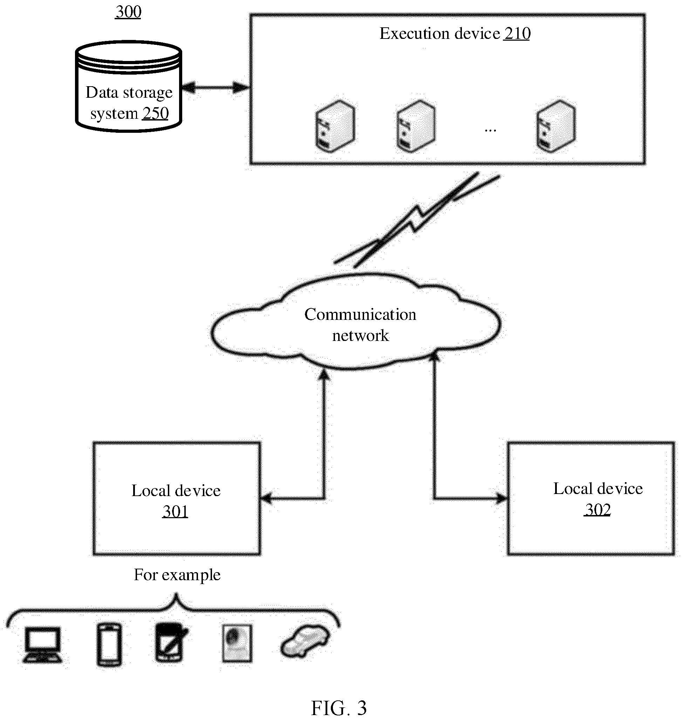

FIG. 3 is a system architecture 300 according to an embodiment of this application. An execution device 210 is implemented by one or more servers. Optionally, the execution device 210 cooperates with another computing device, for example, a device such as a data storage device, a router, or a load balancer. The execution device 210 may be disposed on one physical site, or distributed on a plurality of physical sites. The execution device 210 may use data in a data storage system 250 or invoke program code in a data storage system 250 to implement an object recommendation function. Specifically, information about to-be-recommended objects is input into a recommendation model, and the recommendation model generates an estimated score for each to-be-recommended object, then ranks the to-be-recommended objects in descending order based on estimated scores, and recommends a to-be-recommended object to a user based on a ranking result. For example, top 10 objects in the ranking result are recommended to the user.

The data storage system 250 is configured to receive and store a parameter of the recommendation model sent by a training device, and is configured to store recommendation result data obtained by using the recommendation model. Certainly, program code (or instructions) needed for normal running of the storage system 250 may be also included. The data storage system 250 may be one device that is deployed outside the execution device 210 or a distributed storage cluster including a plurality of devices that is deployed outside the execution device 210. In this case, when the execution device 210 needs to use data in the storage system 250, the storage system 250 may send the data needed by the execution device to the execution device 210. Correspondingly, the execution device 210 receives and stores (or buffers) the data. Certainly, the data storage system 250 may be alternatively deployed on the execution device 210. When deployed on the execution device 210, the distributed storage system may include one or more memories. Optionally, when there are a plurality of memories, different memories are configured to store different types of data. For example, the model parameter of the recommendation model generated by the training device and the recommendation result data obtained by using the recommendation model may be respectively stored in two different memories.

Users may operate their own user equipment (for example, a local device 301 and a local device 302) to interact with the execution device 210. Each local device may be any computing device, for example, a personal computer, a computer workstation, a smartphone, a tablet computer, an intelligent camera, a smart automobile, another type of cellular phone, a media consumption device, a wearable device, a set-top box, or a game console.

A local device of each user may interact with the execution device 210 through a communication network of any communication mechanism/communication standard. The communication network may be a wide area network, a local area network, a point-to-point connection, or any combination thereof.

In another implementation, the execution device 210 may be implemented by a local device. For example, the local device 301 may implement a recommendation function of the execution device 210 based on the recommendation model, to obtain user feature information and feed back a recommendation result to a user, or provide a service for a user of the local device 302.

Embodiments of this application relate to massive application of a neural network. Therefore, for ease of understanding, the following first describes terms and concepts related to the neural network in embodiments of this application.

1. Click-through rate (click-through rate, CTR)

The click-through rate is also referred to as a click-through probability. The click-through rate means a ratio of a quantity of clicks on recommendation information (for example, a recommended article) on a website or an application to a quantity of times that the recommendation information is shown. The click-through rate is usually an important indicator for measuring a recommendation system.

2. Personalized recommendation system

The personalized recommendation system is a system that performs analysis by using a machine learning algorithm based on historical data (for example, operation information in embodiments of this application) of a user, predicts a new request based on an analysis result, and provides a personalized recommendation result.

3. Offline training (offline training)

The offline training is a module that performs, in the personalized recommendation system, iterative update on a parameter of a recommendation model by using a machine learning algorithm based on historical data (for example, operation information in embodiments of this application) of a user, until a specified requirement is met.

4. Online prediction (online inference)

Online prediction is to predict a user preference to a recommended article in a current context environment based on an offline trained model and features of a user, the article, and the context, and predict a probability that the user selects the recommended article.
For example, FIG. 3 is a schematic diagram of a recommendation system according to an embodiment of this application. As shown in FIG. 3, when one user enters a system, a recommendation request is triggered. The recommendation system inputs the request and related information (for example, operation information in embodiments of this application) into the recommendation model, and then predicts a rate that the user selects an article in the system. Further, articles are sorted in descending order based on the predicted selection rate or a specific function based on the selection rate. In other words, the recommendation system may sequentially present the articles at different positions as a recommendation result for the user. The user browses the articles at different positions, and performs user behavior such as browsing, selecting, and downloading. In addition, actual user behavior is stored in a log as training data. An offline training module continuously updates the parameter of the recommendation model, to improve prediction effect of the model.
For example, the user may trigger a recommendation system of an application market in an intelligent terminal (for example, a mobile phone) by opening the application market. The recommendation system of the application market predicts, based on a historical behavior log of the user, for example, a historical download record of the user and a user selection record, an application market feature, and environment feature information such as time, and a place, a probability that the user downloads each candidate app. Based on a calculated result, the recommendation system of the application market may present candidate apps in descending order based on predicted probability values, to improve a download probability of the candidate app.
For example, an app with a higher predicted user selection rate may be ranked higher, and an app with a lower predicted user selection rate may be ranked lower.
The recommendation model may be a neural network model. The following describes related terms and concepts of a neural network that may be used in embodiments of this application.

(1) Neural network

The neural network may include a neuron. The neuron may be an operation unit that uses $x_s$ (namely, input data) and an intercept of 1 as an input. An output of the operation unit may be as follows:

$$h_{W,b}(x) = f(W^T x) = f(\sum_{s=1}^{n} W_s x_s + b);$$

s = 1, 2, ..., or n. n is a natural number greater than 1. $W_s$ is a weight of $x_s$. b is a bias of the neuron. f indicates an activation function (activation function) of the neuron. The activation function is used for introducing a non-linear characteristic into the neural network, to convert an input signal of the neuron into an output signal. The output signal of the activation function may be used as an input of a next convolutional layer, and the activation function may be a sigmoid function. The neural network is a network formed by connecting a plurality of single neurons together. To be specific, an output of one neuron may be an input to another neuron. An input of each neuron may be connected to a local receptive field of a previous layer to extract a feature of the local receptive field. The local receptive field may be a region including several neurons.

(2) Deep neural network

The deep neural network (Deep Neural Network, DNN) is also referred to as a multilayer neural network, and may be understood as a neural network having a plurality of hidden layers. There is no special metric for "a plurality of" herein. The DNN is divided based on positions of different layers, and a neural network in the DNN may be divided into three types: an input layer, a hidden layer, and an output layer. Generally, a first layer is the input layer, a last layer is the output layer, and a middle layer is the hidden layer. Layers are fully connected. To be specific, any neuron at an $i^{th}$ layer is necessarily connected to any neuron at an $(i+1)^{th}$ layer. Although the DNN seems to be complex, the DNN is actually not complex in terms of work at each layer, and is simply expressed as the following linear relationship expression: $\vec{y} = \alpha(W\vec{x} + \vec{b})$. Herein, $\vec{x}$ is an input vector, $\vec{y}$ is an output vector, $\vec{b}$ is an offset vector, W is a weight matrix (also referred to as a coefficient), and $\alpha()$ is an activation function. At each layer, such a simple operation is performed on the input vector $\vec{x}$, to obtain the output vector $\vec{y}$. Because a quantity of DNN layers is large, a quantity of coefficients W and a quantity of offset vectors b are also large. These parameters are defined in the DNN as follows: The coefficient W is used as an example. It is assumed that in a three-layer DNN, a linear coefficient from a fourth neuron at a second layer to a second neuron at a third layer is defined as $W_{24}^3$. The superscript 3 represents a layer at which the coefficient W is located, and the subscript corresponds to an output third-layer index 2 and an input second-layer index 4. In summary, a coefficient from a $k^{th}$ neuron at an $(L-1)^{th}$ layer to a $j^{th}$ neuron at an $L^{th}$ layer is defined as $W_{jk}^L$. It should be noted that the input layer does not have the parameter W. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective is to obtain a weight matrix of all layers of a trained deep neural network (a weight matrix including vectors W of a plurality of layers).

(3) Loss function

In a process of training a deep neural network, because it is expected that an output of the deep neural network is as close as possible to a value that actually needs to be predicted, a current predicted value of the network and an actually expected target value may be compared, and then a weight vector of each layer of the neural network is updated based on a difference between the current predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the actually expected target value or a value that more approximates the actually expected target value. Therefore, "how to obtain the difference between the predicted value and the target value through comparison" needs to be predefined. This is a loss function (loss function) or an objective function (objective function). The loss function and the objective function are important equations that measure the difference between the predicted value and the target value. The loss function is used as an example. A larger output value (loss) of the loss function indicates a larger difference. Therefore, training of the deep neural network is a process of minimizing the loss as much as possible.

(4) Back propagation algorithm

In a training process, a value of a parameter of an initial model may be corrected by using an error back propagation (back propagation, BP) algorithm, so that an error loss of the model becomes increasingly smaller. Specifically, an input signal is forward propagated until the error loss occurs in an output, and the parameter of the initial model is updated through back propagation of error loss information, to converge the error loss. The back propagation algorithm is an error-loss-centered back propagation motion intended to obtain a parameter, such as a weight matrix, of an optimal model.

To improve a personalized degree of the recommendation system and predict a list of articles that meet user preference, the recommendation system usually interacts with features from different perspectives, such as a user feature, a commodity feature, and a context feature, to capture user preference. Common feature interaction manners in the industry are classified into two types. One is a stack structure (stacked structure), and the other is a parallel structure (parallel structure).

The parallel structure may include a cross network (cross network) and a deep network (deep network). The cross network may be referred to as an explicit interaction network (explicit component). The deep network may be referred to as an implicit interaction network (implicit component). In an existing implementation, both the cross network (cross network) and the deep network (deep network) use a feature vector output by a bottom layer (embedding layer) as an input, and independently process data (that is, only separately perform a data interaction process), and do not interact with each other. The two networks are fused and output at a final output layer (output layer). Typical models include Wide & Deep, DCN, xDeepFM, and the like.

In a current parallel interaction model, parallel networks do not share any information in their respective interaction processes, and fusion is performed only at a final output layer, which may be referred to as late fusion (late fusion). This manner ignores a synergistic function between different feature interaction manners. In addition, data input between the parallel networks is the same, and heterogeneity of features for different interaction manners is ignored, that is, different features bring different amounts of information to different interaction manners. Consequently, data processing accuracy of the model is poor.

To resolve the foregoing problem, this application provides a recommendation method. The following uses a model inference phase as an example to describe the information recommendation method provided in an embodiment of this application.

FIG. 5 is a schematic diagram of an embodiment of a recommendation method according to an embodiment of this application. As shown in FIG. 5, the recommendation method provided in this embodiment of this application includes the following steps.

501: Obtain a target feature vector, where the target feature vector is obtained by performing feature extraction on attribute information of both a target user and a target article.

In this embodiment of this application, step 501 may be performed by a terminal device. The terminal device may be a portable mobile device, for example, including but not limited to a mobile or portable computing device (such as a smartphone), a personal computer, a server computer, a handheld device (such as a tablet) or a laptop device, a multiprocessor system, a game console or controller, a microprocessor-based system, a set-top box, a programmable consumer electronic product, a mobile phone, a mobile computing device and/or communication device with a wearable or accessory shape factor (such as a watch, glasses, a headphone or an earplug), a network PC, a minicomputer, a mainframe computer, and a distributed computing environment including any of the foregoing systems or devices.

In this embodiment of this application, step 501 may be performed by a server on a cloud side.

For ease of description, forms of an execution body are not distinguished in the following, and the execution bod is described as an execution device.

In a possible implementation, to calculate a probability that the target user selects the target article, the execution device may obtain the attribute information of the target user and the attribute information of the target article.

The attribute information of the target user may be an attribute related to a preference feature of the user, and may be at least one of a gender, an age, an occupation, income, a hobby, and an education degree. The gender may be male or female. The age may be a number ranging from 0 to 100. The occupation may be teacher, programmer, chef, or the like. The hobby may be basketball, tennis, or running. The education degree may be elementary school, junior high school, high school, university, and the like. This application does not limit a specific type of the attribute information of the target user.

The article may be a physical article or a virtual article, for example, may be an article such as an app, audio and a video, a web page, or news. The attribute information of the article may be at least one of an article name, a developer, an installation package size, a category, and a good rating. For example, the article is an application. The category of the article may be chat, parkour game, office, or the like. The good rating may be a score, a comment, or the like for the article. A specific type of the attribute information of the article is not limited in this application.

In a possible implementation, feature extraction may be performed on the attribute information of both the target user and the target article based on an embedding layer, to obtain a target feature vector (the feature vector may also be referred to as an embedding vector).

In a possible implementation, feature extraction may be separately performed on the target user and each attribute information of the target user based on an embedding layer (embedding layer), to obtain an embedding vector corresponding to each attribute information. A concatenation (concat) operation may be performed on each embedding vector, to obtain a target feature vector. The target feature vector may be used as an input of each of the cross network and the deep network.

In a possible implementation, after concatenation is performed on each embedding vector, a concatenation result may not be used as an input of each of the cross network and the deep network. However, the input of each of the cross network and the deep network may be obtained based on a trained network that may learn weight distribution of the feature in both the cross network and the deep network and adjust the concatenation result based on the weight distribution.

In a possible implementation, refer to FIG. 6a. The network may be a third feature adaptation network. Optionally, the third feature adaptation network may include two sub-networks. One sub-network corresponds to the cross network, and one sub-network corresponds to the deep network. It is equivalent to configuring a feature adaptation module for each feature interaction network (that is, the cross network and the deep network), to learn weight distribution of the feature in each interaction network.

In a possible implementation, a third feature adaptation network may be a fully-connected network, a squeeze-and-excitation network (squeeze-and-excitation network), an attention network, an SENet, or a gatenet (gatenet). The third feature adaptation network may include two sub-networks. One sub-network corresponds to the cross network, and one sub-network corresponds to the deep network. The sub-network may be a fully-connected network, a squeeze-and-excitation network (squeeze-and-excitation network), an attention network, an SENet, or a gatenet (gatenet).

Specifically, feature extraction may be performed on attribute information of each of the target user and the target user based on an embedding layer, to obtain an embedding vector corresponding to each attribute information. A concatenation (concat) operation may be performed on each embedding vector, to obtain an initial feature vector. The initial feature vector is processed by using the third feature adaptation network, to obtain a fifth weight corresponding to the cross network and a sixth weight corresponding to the deep network. The sub-network corresponding to the cross network may process the initial feature vector, to obtain the fifth weight corresponding to the cross network. The sub-network corresponding to the deep network may process the initial feature vector, to obtain the sixth weight corresponding to the deep network.

The initial feature vector may include a plurality of embedded vectors, and the fifth weight may include weight values corresponding to all the embedded vectors. Optionally, the weight values corresponding to all the embedded vectors may be the same or different. Similarly, the sixth weight may include weight values corresponding to all the embedded vectors. Optionally, the weight values corresponding to all the embedded vectors may be the same or different.

In a possible implementation, the initial feature vector may be weighted with the fifth weight and the sixth weight separately, to obtain a first network input corresponding to the cross network and a second network input corresponding to the deep network. The first network input is used as an input of the cross network, and the second network input is used as an input of the deep network. It is equivalent to that a third feature adaptation network is introduced between an input layer and a feature interaction layer (that is, the cross network and the deep network). The third feature adaptation network may include two sub-networks. One sub-network corresponds to the cross network, and one sub-network corresponds to the deep network. It is equivalent to configuring a feature adaptation module for each feature interaction network (that is, the cross network and the deep network), to learn weight distribution of the feature in each interaction network. Then, the calibrated feature (that is, the first network input and the second network input) is separately input to the cross network and deep network.

In this embodiment of this application, the third feature adaptation network may learn heterogeneous parameter distribution for different interaction networks, to avoid excessive sharing. Further, the first network input is used as the input of the cross network, and the second network input is used as the input of the deep network, so that data processing accuracy of the recommendation model can be improved.

502: Process the target feature vector by using a recommendation model, to obtain recommendation information, where the recommendation information indicates a probability that the target user selects the target article, the recommendation model includes a cross network (cross network), a deep network (deep network), and a target network, the cross network includes a first cross layer (cross layer) and a second cross layer, and the deep network includes a first deep layer (deep layer) and a second deep layer; the target network is used to perform fusion processing on a first intermediate output that is output by the first cross layer and a second intermediate output that is output by the first deep layer, to obtain a first fusion result, and the target network is further used to: process the first fusion result to obtain a first weight corresponding to the first cross layer and a second weight corresponding to the first deep layer, and weight the first fusion result with the first weight and the second weight separately, to obtain a first intermediate input and a second intermediate input; and the first intermediate input is input data of the second cross layer, and the second intermediate input is input data of the second deep layer.

In a possible implementation, the target feature vector may be used as an input of the recommendation model. Optionally, the target feature vector may be used as the input of each of the cross network and the deep network in the recommendation model. For example, the first network input may be used as the input of the cross network, and the second network input may be used as the input of the deep network.

The following introduces the cross network.

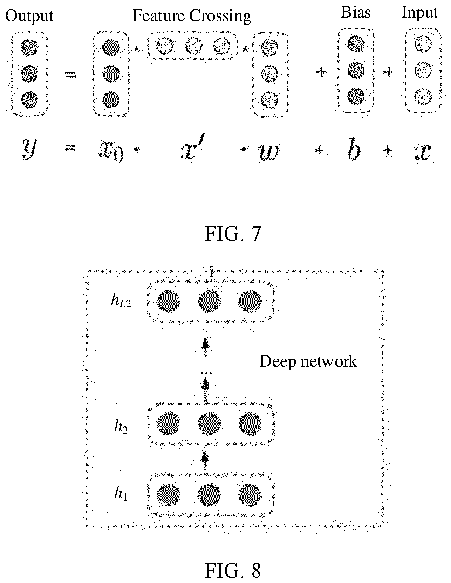

FIG. 6b is a schematic diagram of a structure of the cross network. A fixed interaction manner is designed for the cross network, that is, an inner product is performed on an interaction result of an upper layer and an input layer each time, and then the interaction result of the upper layer is added to an inner product result. More repeated times of this interaction manner indicate more interaction orders. The cross network may include a plurality of cross layers. FIG. 7 shows an interaction manner of the cross layer. $x_0$ is an input layer, x' is initially $x_0$. Then an output (namely, y) of an upper layer follows. w is a weight parameter. b is a weight offset, x is the output (namely, y) of the upper layer and may be understood as the same as x'.

The following introduces the deep network.

Due to a small quantity of parameters in the cross-connect network, a capability (capacity) of the model is limited. To capture a higher order nonlinear cross, one deep network may be introduced in parallel. Optionally, the deep network may be a fully connected feedforward neural network. FIG. 8 is a schematic diagram of a structure the deep network.

In an existing implementation, there is no data exchange between the cross network and the deep network. In this embodiment of this application, one target network used for data exchange may be introduced between the cross network and the deep network.

The following describes the target network in this embodiment of this application.

The target network in this embodiment of this application may implement data exchange between a network layer of the cross network and a network layer of the deep network. Specifically, the cross network may include a plurality of cross layers, and the deep network may include a plurality of deep layers. Optionally, a quantity of cross layers in the cross network and a quantity of deep layers in the deep network are consistent (or are inconsistent, but there is a position correspondence).

For example, when the quantity of cross layers in the cross network is consistent with the quantity of deep layers in the deep network, a cross layer and a deep layer at a same position are in a one-to-one correspondence. For example, the cross network may include a cross layer 1, a cross layer 2, a cross layer 3, a cross layer 4, and a cross layer 5, and the deep network may include a deep layer 1, a deep layer 2, a deep layer 3, a deep layer 4, and a deep layer 5. In this case, the cross layer 1 corresponds to the deep layer 1, the cross layer 2 corresponds to the deep layer 2, the cross layer 3 corresponds to the deep layer 3, the cross layer 4 corresponds to the deep layer 4, and the cross layer 5 corresponds to the deep layer 5.

For example, when the quantity of cross layers in the cross network is inconsistent with the quantity of deep layers in the deep network, a cross layer in the cross network and a deep layer in the deep network that are in a same relative position are in a one-to-one correspondence. For example, the cross network may include a cross layer 1, a cross layer 2, and a cross layer 3, and the deep network may include a deep layer 1, a deep layer 2, a deep layer 3, a deep layer 4, a deep layer 5, and a deep layer 6. In this case, the cross layer 1 corresponds to the deep layer 1 and the deep layer 2, the cross layer 2 corresponds to the deep layer 3 and the deep layer 4, and the cross layer 3 corresponds to the deep layer 5 and the deep layer 6.

In a possible implementation, the cross network may include a first cross layer (cross layer) and a second cross layer, and the deep network includes a first deep layer (deep layer) and a second deep layer. Each of the first cross layer and the second cross layer may be any adjacent network layer in the cross network. Each of the first deep layer and the second deep layer may be any adjacent network layer in the deep network. The first cross layer may correspond to the first deep layer, and the second cross layer may correspond to the second deep layer. For example, when the quantity of cross layers in the cross network is consistent with the quantity of deep layers in the deep network, the first cross layer may be a cross layer 1, the first deep layer may be a deep layer 1, the second cross layer may be a cross layer 2, and the second deep layer may be a deep layer 2. For example, when the quantity of cross layers in the cross network is inconsistent with the quantity of deep layers in the deep network, the first cross layer may be a cross layer 1, the first deep layer may be a deep layer 1 and a deep layer 2, the second cross layer may be a cross layer 2, and the second deep layer may be a deep layer 3 and a deep layer 4.

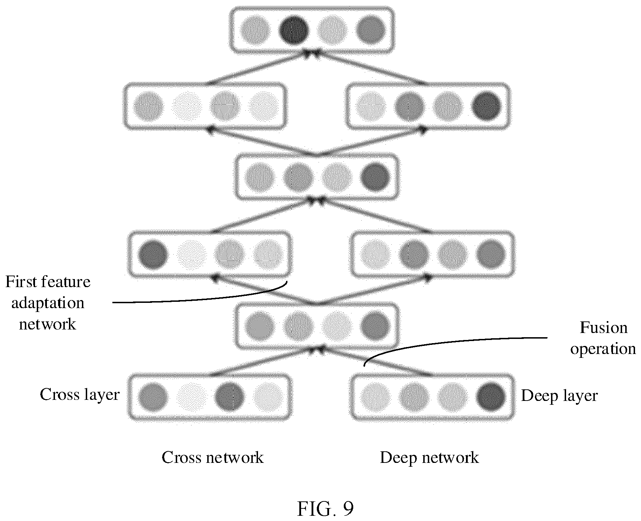

The target network is used to perform fusion processing on the first intermediate output that is output by the first cross layer and the second intermediate output that is output by the first deep layer, to obtain the first fusion result. (For a schematic diagram of data processing by the target network, refer to FIG. 9).

In a possible implementation, the fusion processing may include one of point-wise addition (point-wise addition), Hadamard product, concatenation, and attention mechanism based pooling.

An input of the first cross layer may be a plurality of embedding vectors (or referred to as feature vectors). The first intermediate output that is output by the first cross layer may be a plurality of embedding vectors. An input of the first deep layer may be a plurality of embedding vectors. The second intermediate output that is output by the first deep layer may be a plurality of embedding vectors. Therefore, fusion processing may be performed on the plurality of embedding vectors output by the first cross layer and the plurality of embedding vectors output by the first deep layer, for example, point-wise addition, Hadamard product, concatenation, and attention mechanism based pooling. In a possible implementation, the first intermediate output includes M first feature vectors, the second intermediate output includes M second feature vectors, and the first fusion result includes M third feature vectors.

The target network is further used to: process the first fusion result to obtain the first weight corresponding to the first cross layer and the second weight corresponding to the first deep layer, and weight the first fusion result with the first weight and the second weight separately, to obtain the first intermediate input corresponding to the first cross layer and the second intermediate input corresponding to the first deep layer.

In a possible implementation, the target network may include a first feature adaptation network. The first feature adaptation network is a fully-connected network, a squeeze-and-excitation network (squeeze-and-excitation network), an attention network, an SENet, or a gatenet (gatenet). For descriptions of the first feature adaptation network, refer to the descriptions of the third feature adaptation network in the foregoing embodiment. Details are not described herein again. Then, the target network may process the first fusion result by using the first feature adaptation network.

In a possible implementation, the first intermediate output includes M first feature vectors, the second intermediate output includes M second feature vectors, and the first fusion result includes M third feature vectors. The first weight includes a first weight value corresponding to each first feature vector. The second weight includes a second weight value corresponding to each second feature vector. After the first weight and the second weight are obtained, each first feature vector of the M third feature vectors may be weighted with the corresponding first weight value, and each second feature vector of the M third feature vectors may be weighted with the corresponding second weight value.

The first fusion result may include the M third feature vectors. The first weight may include first weight values corresponding to all the third feature vectors. Optionally, the first weight values corresponding to all the third feature vectors may be the same or different. Similarly, the second weight may include second weight values corresponding to all the third feature vectors. Optionally, the second weight values corresponding to all the third feature vectors may be the same or different.

In a possible implementation, the first fusion result may be weighted with the first weight and the second weight separately, to obtain the first intermediate input corresponding to the first cross layer and the second intermediate input corresponding to the first deep layer. The first intermediate input is used as an input of the second cross layer, and the second intermediate input is used as an input of the second deep layer. It is equivalent to that a first feature adaptation network is introduced between the cross network and the deep network. The first feature adaptation network may include two sub-networks. One sub-network corresponds to the cross network, and one sub-network corresponds to the deep network. It is equivalent to configuring a feature adaptation module for each feature interaction network (that is, the cross network and the deep network), to learn weight distribution of the feature in each interaction network. Then, the calibrated feature (that is, the first intermediate input and the second intermediate input) is separately input to a next cross network and a next deep network. For example, after the first intermediate input and the second intermediate input are respectively obtained, the second cross layer may process the first intermediate input, and the second deep layer may process the second intermediate input.

In this embodiment of this application, the target network may fuse an output of the cross layer in the cross network and an output of the deep layer in the deep network, and perform weight-based adaptation. This implements data exchange between the cross network and the deep network, and improves data processing accuracy of the recommendation model.

In a possible implementation, the target network may further fuse an output of the second cross layer and an output of the second deep layer, and perform weight-based adaptation. For example, the cross network further includes a third cross layer, and the deep network further includes a third deep layer. The target network is further used to perform fusion processing on a third intermediate output that is output by the second cross layer and a fourth intermediate output that is output by the second deep layer, to obtain a second fusion result. The target network is further used to: process the second fusion result to obtain a third weight corresponding to the second cross layer and a fourth weight corresponding to the second deep layer, and weight the second fusion result with the third weight and the fourth weight separately, to obtain a third intermediate input corresponding to the second cross layer and a fourth intermediate input corresponding to the second deep layer. The third cross layer is configured to process the third intermediate input. The third deep layer is configured to process the fourth intermediate input.

In a possible implementation, the target network includes a second feature adaptation network, and the second feature adaptation network is a fully-connected network, a squeeze-and-excitation network (squeeze-and-excitation network), an attention network, an SENet, or a gatenet (gatenet). Further, the target network may process the second fusion result by using the second feature adaptation network.

In a possible implementation, the second feature adaptation network is a fully-connected network, a squeeze-and-excitation network, an attention network, an SENet or a gatenet.

This is repeated until an output layer is reached. Finally, outputs of different interaction networks and a fused output may be fused, and recommendation information is finally obtained by using an activation function. The recommendation information indicates the probability that the target user selects the target article (namely, a predicted value y").

503: When the recommendation information meets a preset condition, determine to recommend the target article to the target user.

In the foregoing manner, the probability that the target user selects the target article may be obtained, and information recommendation is performed based on the probability. Specifically, when the recommendation information meets the preset condition, it may be determined to recommend the target article to the target user.

The following describes the preset condition:

In a possible implementation, when information recommendation is performed on the target user, a probability that the target user selects a plurality of articles (including the target article) may be calculated, and a recommendation index of each article for the target user is determined based on the probability that the user selects the plurality of articles (including the target article).

After recommendation indexes of the articles for the target user are obtained, the recommendation indexes may be sorted, and M articles with highest recommendation indexes are recommended to the target user.

In a possible implementation, one probability threshold may be alternatively set. When a probability that the target user selects a plurality of articles (including the target article) is greater than the probability threshold, the articles may be recommended to the target user.

During information recommendation, the recommendation information may be recommended to the user in a form of a list page, so that the user is expected to perform behavior.

The following uses a click-through rate prediction scenario in an intelligent assistant direct service as an example, to describe the technical solution in this embodiment of this application. Inputs of a click-through rate prediction model include a user feature, an article feature, and a context feature. The model interacts with these features explicitly or implicitly. Improvement of information sharing and a synergistic function between a plurality of interaction manners is a core of the patent technology. A specific process of offline training of the click-through rate prediction model is as follows: Different feature distribution is learned for each feature interaction network, and a plurality of interaction networks are separately input. Interaction results of different interaction networks are fused, and interaction manners learned in the different networks are shared. Heterogeneous feature distribution is learned for subsequent different interaction networks based on a fused network parameter. The foregoing steps are repeated until the output layer is reached. Outputs of the different interaction networks and a fused result are concatenated, and a predicted value is finally obtained by inputting an activation function. For an online service, the model is directly loaded for online estimation.

The following describes beneficial effect of this embodiment of this application with reference to an experiment. Three datasets are used: a Criteo dataset, an Avazu dataset, and a Huawei industrial dataset. Statistical information is shown in Table 1.

**Table 1: Statistics of evaluation datasets**

| Dataset | #Feature Fields | #Instances (x$10^7$) | Positive Ratio |
|---|---|---|---|
| Avazu | 23 | 3.64 | 17% |
| Criteo | 39 | 9.69 | 50% |
| Industrial | 85 | 8.75 | 3.3% |

In the experiment, offline evaluation indicators are AUC and log loss, and online evaluation indicators are click-through rate prediction (click through rate, CTR) and ECPM. The experiment is performed on the three data sets, and uses an example in which DCN is used as a basic framework of the model. Table 2 shows an experiment result. It can be learned from the table that, compared with a comparison baseline, this embodiment of this application can achieve a best result.

| Model | Avazu | | Criteo | | Industrial | |
|---|---|---|---|---|---|---|
| | AUC | LogLoss | AUC | LogLoss | AUC | LogLoss |
| FNN | 0.7738 | 0.3841 | 0.7941 | 0.5482 | 0.7261 | 0.1368 |
| Wide&Deep | 0.7745 | 0.3836 | 0.7952 | 0.5470 | 0.7255 | 0.1369 |
| DeepFM | 0.7747 | 0.3833 | 0.7955 | 0.5467 | 0.7262 | 0.1369 |
| DCN | 0.7751 | 0.3835 | 0.7963 | 0.5459 | 0.7263 | 0.1368 |
| DCN-V2 | 0.7755 | 0.3822 | 0.7983 | 0.5435 | 0.7272 | 0.1368 |
| xDeepFM | 0.7754 | 0.3825 | 0.7968 | 0.5455 | 0.7275 | 0.1367 |
| AutoInt | 0.7756 | 0.3821 | 0.7983 | 0.5437 | 0.7282 | 0.1365 |
| PNN | 0.7759 | 0.3820 | 0.7985 | 0.5434 | 0.7269 | 0.1366 |
| **EDCN** | **0.7793*** | **0.3803*** | **0.8001*** | **0.5415*** | **0.7310*** | **0.1361*** |
| Rel Impr. | 0.44% | 0.45% | 0.20% | 0.35% | 0.38% | 0.29% |

This embodiment of this application may be a general feature interaction enhancement framework, and can improve recommendation effect of different multi-tower models. Several commonly used deep models in the industry are selected for CTR prediction, and modules in this embodiment of this application are introduced to these models, to verify universality of the models. Experimental results are shown in Table 3 and Table 4. A multi-tower interaction module is the target network described in this embodiment of this application.

**Table 3 Universality of the feature adaptation module**

| Model | Avazu | | Criteo | | Industrial | |
|---|---|---|---|---|---|---|
| | AUC | LogLoss | AUC | LogLoss | AUC | LogLoss |
| DeepFM | 0.7747 | 0.3833 | 0.7955 | 0.5467 | 0.7262 | 0.1369 |
| DeepFM$_{Regulation}$ | 0.7756 | 0.3831 | 0.7968 | 0.5452 | 0.7280 | 0.1365 |
| xDeepFM | 0.7754 | 0.3825 | 0.7968 | 0.5455 | 0.7275 | 0.1367 |
| xDeepFM$_{Regulation}$ | 0.7765 | 0.3817 | 0.7977 | 0.5443 | 0.7288 | 0.1365 |
| AutoInt | 0.7756 | 0.3821 | 0.7983 | 0.5437 | 0.7282 | 0.1365 |
| AutoInt$_{Regulation}$ | 0.7763 | 0.3818 | 0.7986 | 0.5432 | 0.7294 | 0.1365 |
| DCN | 0.7751 | 0.3835 | 0.7963 | 0.5459 | 0.7263 | 0.1368 |
| DCN$_{Regulation}$ | 0.7771 | 0.3817 | 0.7985 | 0.5433 | 0.7286 | 0.1365 |
| DCN-V2 | 0.7755 | 0.3822 | 0.7983 | 0.5435 | 0.7272 | 0.1368 |
| DCN-V2$_{Regulation}$ | 0.7761 | 0.3819 | 0.7985 | 0.5433 | 0.7289 | 0.1365 |
| DCN$_{Bridge}$ | 0.7775 | 0.3814 | 0.7997 | 0.5420 | 0.7300 | 0.1364 |
| DCN$_{BridgeRegulate}$ | 0.7793 | 0.3803 | 0.8001 | 0.5415 | 0.7310 | 0.1361 |

Note that model DCN$_{BridgeRegulate}$ = EDCN.

**Table 4 Universality of the multi-tower interaction module**

| Model | Avazu | | Criteo | | Industrial | |
|---|---|---|---|---|---|---|
| | AUC | LogLoss | AUC | LogLoss | AUC | LogLoss |
| xDeepFM | 0.7754 | 0.3825 | 0.7968 | 0.5455 | 0.7275 | 0.1367 |
| xDeepFM$_{Bridge}$ | 0.7761 | 0.3824 | 0.7974 | 0.5445 | 0.7291 | 0.1364 |
| DCN | 0.7751 | 0.3835 | 0.7963 | 0.5459 | 0.7263 | 0.1368 |
| DCN$_{Bridge}$ | 0.7775 | 0.3814 | 0.7997 | 0.5420 | 0.7300 | 0.1364 |
| DCN-V2 | 0.7755 | 0.3822 | 0.7983 | 0.5435 | 0.7272 | 0.1368 |
| DCN-V2$_{Bridge}$ | 0.7776 | 0.3811 | 0.7987 | 0.5431 | 0.7292 | 0.1364 |

It can be learned that model performance can be significantly improved after the modules in the patent of this application are introduced into these common multi-tower deep models. It can be learned that this framework has good compatibility.

An embodiment of this application provides a recommendation method. The method includes: obtaining a target feature vector, where the target feature vector is obtained by performing feature extraction on attribute information of both a target user and a target article; processing the target feature vector by using a recommendation model, to obtain recommendation information, where the recommendation information indicates a probability that the target user selects the target article, the recommendation model includes a cross network (cross network), a deep network (deep network), and a target network, the cross network includes a first cross layer (cross layer) and a second cross layer, and the deep network includes a first deep layer (deep layer) and a second deep layer; the target network is used to perform fusion processing on a first intermediate output that is output by the first cross layer and a second intermediate output that is output by the first deep layer, to obtain a first fusion result, and the target network is further used to: process the first fusion result to obtain a first weight corresponding to the first cross layer and a second weight corresponding to the first deep layer, and weight the first fusion result with the first weight and the second weight separately, to obtain a first intermediate input and a second intermediate input; and the first intermediate input is input data of the second cross layer, and the second intermediate input is input data of the second deep layer; and when the recommendation information meets a preset condition, determining to recommend the target article to the target user. In this way, the target network learns heterogeneous parameter distribution for different interaction networks, to avoid excessive sharing, and introduces interaction signals between different interaction networks. This enhances a synergistic function of a multi-tower network and improves prediction accuracy of the model. The target network may fuse an output of the cross layer in the cross network and an output of the deep layer in the deep network, and perform weight-based adaptation. This implements data exchange between the cross network and the deep network, and improves data processing accuracy of the recommendation model.

The foregoing describes the recommendation method provided in this embodiment of this application from the perspective of a model inference process, and the following describes a model training process.

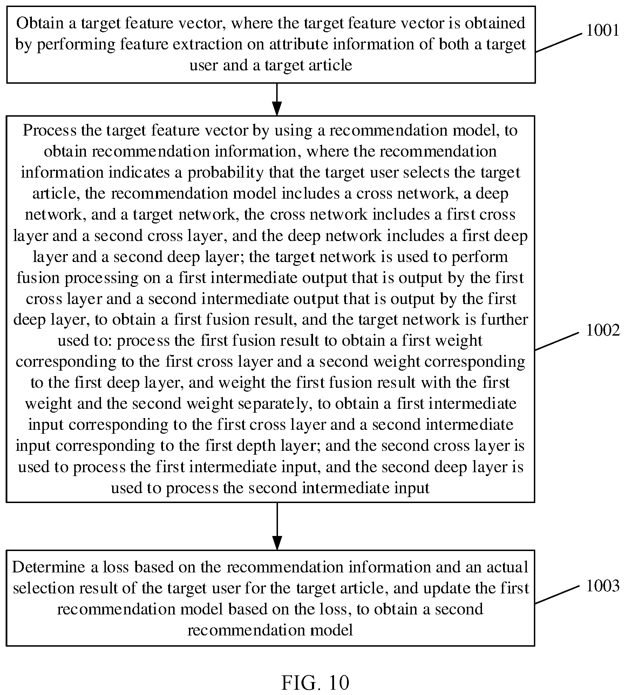

FIG. 10 is a schematic flowchart of a model training method according to an embodiment of this application. As shown in FIG. 10, the model training method provided in this embodiment of this application includes the following steps.

1001: Obtain a target feature vector, where the target feature vector is obtained by performing feature extraction on attribute information of both a target user and a target article.

1002: Process the target feature vector by using a first recommendation model, to obtain recommendation information, where the recommendation information indicates a probability that the target user selects the target article, the recommendation model includes a cross network (cross network), a deep network (deep network), and a target network, the cross network includes a first cross layer (cross layer) and a second cross layer, and the deep network includes a first deep layer (deep layer) and a second deep layer; the target network is used to perform fusion processing on a first intermediate output that is output by the first cross layer and a second intermediate output that is output by the first deep layer, to obtain a first fusion result, and the target network is further used to: process the first fusion result to obtain a first weight corresponding to the first cross layer and a second weight corresponding to the first deep layer, and weight the first fusion result with the first weight and the second weight separately, to obtain a first intermediate input and a second intermediate input; and the first intermediate input is input data of the second cross layer, and the second intermediate input is input data of the second deep layer.

1003: Determine a loss based on the recommendation information and an actual selection result of the target user for the target article, and update the first recommendation model based on the loss, to obtain a second recommendation model.

In a possible implementation, label data y and a predicted value y may be used to obtain a loss based on a loss function such as a cross-entropy (LogLoss) and a root mean square error (RMSE). Based on the loss and a gradient descent algorithm, joint training and optimization of parameters of different module such as an automatic feature discretization module and a deep model may be completed by using a chain rule. Parameters of both the multi-tower interaction module and the feature adaptation module are continuously adjusted by using the loss function of the model, and finally the optimized modules are obtained.

In a possible implementation, the fusion processing includes one of point-wise addition (point-wise addition), Hadamard product, concatenation, and attention mechanism based pooling.

In a possible implementation, the target network includes a first feature adaptation network, and the first feature adaptation network is a fully-connected network, a squeeze-and-excitation network (squeeze-and-excitation network), an attention network, an SENet, or a gatenet (gatenet). The first fusion result may be processed by using the first feature adaptation network.

In a possible implementation, the first intermediate output includes M first feature vectors, the second intermediate output includes M second feature vectors, and the first fusion result includes M third feature vectors. The first weight includes a first weight value corresponding to each first feature vector. The second weight includes a second weight value corresponding to each second feature vector. Each first feature vector of the M third feature vectors may be weighted with the corresponding first weight value, and each second feature vector of the M third feature vectors may be weighted with the corresponding second weight value.

In a possible implementation, the cross network further includes a third cross layer, and the deep network further includes a third deep layer. The target network is further used to perform fusion processing on a third intermediate output that is output by the second cross layer and a fourth intermediate output that is output by the second deep layer, to obtain a second fusion result. The target network is further used to: process the second fusion result to obtain a third weight corresponding to the second cross layer and a fourth weight corresponding to the second deep layer, and weight the second fusion result with the third weight and the fourth weight separately, to obtain a third intermediate input corresponding to the second cross layer and a fourth intermediate input corresponding to the second deep layer. The third cross layer is configured to process the third intermediate input, and the third deep layer is configured to process the fourth intermediate input.

In a possible implementation, the target network includes a second feature adaptation network, and the second feature adaptation network is a fully-connected network, a squeeze-and-excitation network (squeeze-and-excitation network), an attention network, an SENet, or a gatenet (gatenet). The target network may process the second fusion result by using the second feature adaptation network.

In a possible implementation, the target feature vector includes a first network input and a second network input. An initial feature vector may be obtained, where the initial feature vector is obtained by performing feature extraction on the attribute information of both the target user and the target article. The initial feature vector is processed by using a third feature adaptation network, to obtain a fifth weight corresponding to the cross network and a sixth weight corresponding to the deep network. The initial feature vector is weighted with the fifth weight and the sixth weight separately, to obtain a first network input corresponding to the cross network and a second network input corresponding to the deep network. The first network input is used as an input of the cross network. The second network input is used as an input of the deep network. The first recommendation model and the second feature adaptation network may be updated based on the loss, to obtain the second recommendation model and the updated second feature adaptation network.

In a possible implementation, the second feature adaptation network is a fully-connected network, a squeeze-and-excitation network, an attention network, an SENet or a gatenet.

In a possible implementation, the user attribute includes at least one of the following: a gender, an age, an occupation, income, a hobby, and an education degree.

In a possible implementation, the article attribute includes at least one of the following: an article name, a developer, an installation package size, a category, and a good rating.

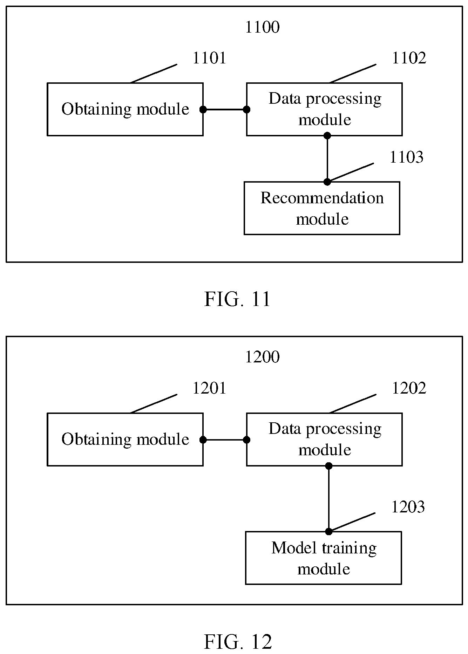

FIG. 11 is a schematic diagram of a structure of a recommendation apparatus 1100 according to an embodiment of this application. The apparatus 1100 includes: an obtaining module 1101, a data processing module 1102, and a recommendation module 1103.

The obtaining module 1101 is configured to obtain a target feature vector, where the target feature vector is obtained by performing feature extraction on attribute information of both a target user and a target article.

For specific descriptions of the obtaining module 1101, refer to the description of step 501 in the foregoing embodiment, and details are not described herein again.

The data processing module 1102 is configured to process the target feature vector by using a recommendation model, to obtain recommendation information. The recommendation information indicates a probability that the target user selects the target article, the recommendation model includes a cross network (cross network), a deep network (deep network), and a target network. The cross network includes a first cross layer (cross layer) and a second cross layer. The deep network includes a first deep layer (deep layer) and a second deep layer. The target network is used to perform fusion processing on a first intermediate output that is output by the first cross layer and a second intermediate output that is output by the first deep layer, to obtain a first fusion result. The target network is further used to: process the first fusion result to obtain a first weight corresponding to the first cross layer and a second weight corresponding to the first deep layer, and weight the first fusion result with the first weight and the second weight separately, to obtain a first intermediate input and a second intermediate input. The first intermediate input is input data of the second cross layer, and the second intermediate input is input data of the second deep layer.

For a specific description of the data processing module 1102, refer to the description of step 502 in the foregoing embodiment, and details are not described herein again.

The recommendation module 1103 is configured to: when the recommendation information meets a preset condition, determine to recommend the target article to the target user.

For a specific description of the recommendation module 1103, refer to the description of step 503 in the foregoing embodiment, and details are not described herein again.

In a possible implementation, the fusion processing includes one of point-wise addition (point-wise addition), Hadamard product, concatenation, and attention mechanism based pooling.

In a possible implementation, the target network includes a first feature adaptation network, and the first feature adaptation network is a fully-connected network, a squeeze-and-excitation network (squeeze-and-excitation network), an attention network, an SENet, or a gatenet (gatenet).

The data processing module is specifically configured to:
process the first fusion result by using the first feature adaptation network.

In a possible implementation, the first intermediate output includes M first feature vectors, the second intermediate output includes M second feature vectors, and the first fusion result includes M third feature vectors. The first weight includes a first weight value corresponding to each first feature vector. The second weight includes a second weight value corresponding to each second feature vector.

The data processing module is specifically configured to:

weight each first feature vector of the M third feature vectors with a corresponding first weight value; and
weight each second feature vector of the M third feature vectors with a corresponding second weight value.

In a possible implementation, the cross network further includes a third cross layer, and the deep network further includes a third deep layer. The target network is further used to perform fusion processing on a third intermediate output that is output by the second cross layer and a fourth intermediate output that is output by the second deep layer, to obtain a second fusion result. The target network is further used to: process the second fusion result to obtain a third weight corresponding to the second cross layer and a fourth weight corresponding to the second deep layer, and weight the second fusion result with the third weight and the fourth weight separately, to obtain a third intermediate input corresponding to the second cross layer and a fourth intermediate input corresponding to the second deep layer. The third cross layer is configured to process the third intermediate input, and the third deep layer is configured to process the fourth intermediate input.

In a possible implementation, the target network includes a second feature adaptation network, and the second feature adaptation network is a fully-connected network, a squeeze-and-excitation network (squeeze-and-excitation network), an attention network, an SENet, or a gatenet (gatenet).

The data processing module is specifically configured to:

process the second fusion result by using the second feature adaptation network.

In a possible implementation, the target feature vector includes a first network input and a second network input.

The obtaining module is specifically configured to:

obtain an initial feature vector, where the initial feature vector is obtained by performing feature extraction on the attribute information of both the target user and the target article; and

process the initial feature vector by using a third feature adaptation network, to obtain a fifth weight corresponding to the cross network and a sixth weight corresponding to the deep network, and weight the initial feature vector with the fifth weight and the sixth weight separately, to obtain a first network input corresponding to the cross network and a second network input corresponding to the deep network, where the first network input is used as an input of the cross network, and the second network input is used as an input of the deep network.

In a possible implementation, the second feature adaptation network is a fully-connected network, a squeeze-and-excitation network, an attention network, an SENet or a gatenet.

In a possible implementation, the user attribute includes at least one of the following: a gender, an age, an occupation, income, a hobby, and an education degree.

The article attribute includes at least one of the following: an article name, a developer, an installation package size, a category, and a good rating.

FIG. 12 is a schematic diagram of a structure of a model training apparatus according to an embodiment of this application. The apparatus 1200 includes: an obtaining module 1201, a data processing module 1202, and a model training module 1203.

The obtaining module 1201 is configured to obtain a target feature vector, where the target feature vector is obtained by performing feature extraction on attribute information of both a target user and a target article.

For specific descriptions of the obtaining module 1201, refer to the description of step 1001 in the foregoing embodiment, and details are not described herein again.

The data processing module 1202 is configured to process the target feature vector by using a first recommendation model, to obtain recommendation information. The recommendation information indicates a probability that the target user selects the target article, the recommendation model includes a cross network (cross network), a deep network (deep network), and a target network. The cross network includes a first cross layer (cross layer) and a second cross layer. The deep network includes a first deep layer (deep layer) and a second deep layer. The target network is used to perform fusion processing on a first intermediate output that is output by the first cross layer and a second intermediate output that is output by the first deep layer, to obtain a first fusion result. The target network is further used to: process the first fusion result to obtain a first weight corresponding to the first cross layer and a second weight corresponding to the first deep layer, and weight the first fusion result with the first weight and the second weight separately, to obtain a first intermediate input and a second intermediate input. The first intermediate input is input data of the second cross layer, and the second intermediate input is input data of the second deep layer.

For a specific description of the data processing module 1202, refer to the description of step 1002 in the foregoing embodiment, and details are not described herein again.

The model training module 1203 is configured to: determine a loss based on the recommendation information and an actual selection result of the target user for the target article, and updating the first recommendation model based on the loss, to obtain a second recommendation model.

For a specific description of the model training module 1203, refer to the description of step 1003 in the foregoing embodiment. Details are not described herein again.

In a possible implementation, the fusion processing includes one of point-wise addition (point-wise addition), Hadamard product, concatenation, and attention mechanism based pooling.

In a possible implementation, the target network includes a first feature adaptation network, and the first feature adaptation network is a fully-connected network, a squeeze-and-excitation network (squeeze-and-excitation network), an attention network, an SENet, or a gatenet (gatenet).

The data processing module is specifically configured to:

process the first fusion result by using the first feature adaptation network.

In a possible implementation, the first intermediate output includes M first feature vectors, the second intermediate output includes M second feature vectors, and the first fusion result includes M third feature vectors. The first weight includes a first weight value corresponding to each first feature vector. The second weight includes a second weight value corresponding to each second feature vector.

The data processing module is specifically configured to:

weight each first feature vector of the M third feature vectors with a corresponding first weight value; and
weight each second feature vector of the M third feature vectors with a corresponding second weight value.

In a possible implementation, the cross network further includes a third cross layer, and the deep network further includes a third deep layer. The target network is further used to perform fusion processing on a third intermediate output that is output by the second cross layer and a fourth intermediate output that is output by the second deep layer, to obtain a second fusion result. The target network is further used to: process the second fusion result to obtain a third weight corresponding to the second cross layer and a fourth weight corresponding to the second deep layer, and weight the second fusion result with the third weight and the fourth weight separately, to obtain a third intermediate input corresponding to the second cross layer and a fourth intermediate input corresponding to the second deep layer. The third cross layer is configured to process the third intermediate input, and the third deep layer is configured to process the fourth intermediate input.

In a possible implementation, the target network includes a second feature adaptation network, and the second feature adaptation network is a fully-connected network, a squeeze-and-excitation network (squeeze-and-excitation network), an attention network, an SENet, or a gatenet (gatenet).

The data processing module is specifically configured to:
process the second fusion result by using the second feature adaptation network.

In a possible implementation, the target feature vector includes a first network input and a second network input.

The obtaining module is specifically configured to:

obtain an initial feature vector, where the initial feature vector is obtained by performing feature extraction on the attribute information of both the target user and the target article; and
process the initial feature vector by using a third feature adaptation network, to obtain a fifth weight corresponding to the cross network and a sixth weight corresponding to the deep network, and weight the initial feature vector with the fifth weight and the sixth weight separately, to obtain a first network input corresponding to the cross network and a second network input corresponding to the deep network, where the first network input is used as an input of the cross network, and the second network input is used as an input of the deep network.

The updating the first recommendation model based on the loss, to obtain a second recommendation model includes:
updating the first recommendation model and the second feature adaptation network based on the loss, to obtain the second recommendation model and the updated second feature adaptation network.

In a possible implementation, the second feature adaptation network is a fully-connected network, a squeeze-and-excitation network, an attention network, an SENet or a gatenet.

In a possible implementation, the user attribute includes at least one of the following: a gender, an age, an occupation, income, a hobby, and an education degree.

In a possible implementation, the article attribute includes at least one of the following: an article name, a developer, an installation package size, a category, and a good rating.

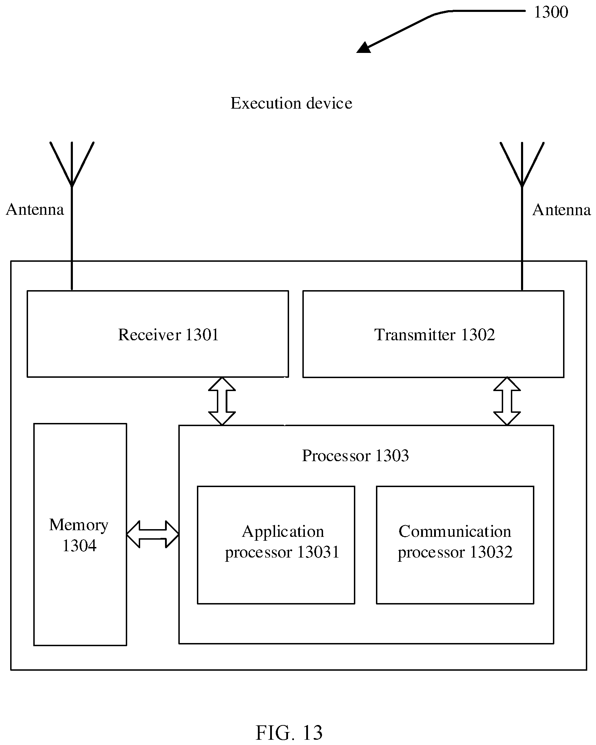

The following describes an execution device provided in an embodiment of this application. FIG. 13 is a schematic diagram of a structure of an execution device according to an embodiment of this application. The execution device 1300 may be specifically a mobile phone, a tablet computer, a laptop computer, a smart wearable device, a server, and the like. This is not limited herein. The recommendation apparatus described in the embodiment corresponding to FIG. 11 may be deployed on the execution device 1300, and the execution device 1300 is configured to implement a function of the recommendation method in the embodiment corresponding to FIG. 10. Specifically, the execution device 1300 includes a receiver 1301, a transmitter 1302, a processor 1303, and a memory 1304 (there may be one or more processors 1303 in the execution device 1300) The processor 1303 may include an application processor 13031 and a communication processor 13032. In some embodiments of this application, the receiver 1301, the transmitter 1302, the processor 1303, and the memory 1304 may be connected through a bus or in another manner.

The memory 1304 may include a read-only memory and a random access memory, and provide instructions and data for the processor 1303. A part of the memory 1304 may further include a nonvolatile random access memory (non-volatile random access memory, NVRAM). The memory 1304 stores a processor and operation instructions, an executable module or a data structure, a subnet thereof, or an expanded set thereof. The operation instructions may include various operation instructions, to implement various operations.

The processor 1303 controls an operation of the execution device. During specific application, the components of the execution device are coupled together through a bus system. In addition to a data bus, the bus system may further include a power bus, a control bus, a status signal bus, and the like. However, for clear description, various types of buses in the figure are marked as the bus system.

The method disclosed in the foregoing embodiments of this application may be applied to the processor 1303, or may be implemented by the processor 1303. The processor 1303 may be an integrated circuit chip, and has a signal processing capability. In an implementation process, steps in the foregoing methods may be implemented by using a hardware integrated logical circuit in the processor 1303, or by using instructions in a form of software. The processor 1303 may be a processor applicable to an AI operation, such as a general-purpose processor, a digital signal processor (digital signal processor, DSP), a microprocessor or a microcontroller, a vision processing unit (vision processing unit, VPU), or a tensor processing unit (tensor processing unit, TPU), and may further include an application-specific integrated circuit (application specific integrated circuit, ASIC), a field-programmable gate array (field-programmable gate array, FPGA), or another programmable logic device, a discrete gate, or a transistor logic device, or a discrete hardware component. The processor 1303 may implement or perform the method, the steps, and the logical block diagrams disclosed in embodiments of this application. The general-purpose processor may be a microprocessor, or any conventional processor. The steps in the methods disclosed with reference to embodiments of this application may be directly performed and completed by a hardware decoding processor, or may be performed and completed by a combination of hardware and a software module in the decoding processor. The software module may be located in a mature storage medium in the art such as a random access memory, a flash memory, a read-only memory, a programmable read-only memory, an electrically erasable programmable memory, or a register. The storage medium is located in the memory 1304, and the processor 1303 reads information in the memory 1304 and completes steps 501 to 503 in the foregoing embodiment in combination with hardware of the processor 1303.

The receiver 1301 may be configured to: receive input digital or character information, and generate a signal input related to setting and function control of the execution device. The transmitter 1302 may be configured to output the digital or character information through a first interface. The transmitter 1302 may further be configured to send instructions to a disk group through the first interface, to modify data in the disk group. The transmitter 1302 may further include a display device such as a display.

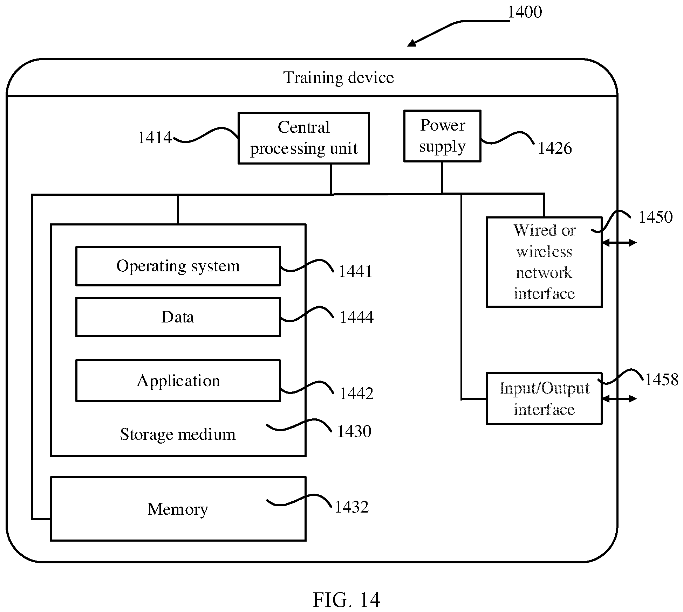

An embodiment of this application further provides a training device. FIG. 14 is a schematic diagram of a structure of a training device according to an embodiment of this application. Specifically, a training device 1400 is implemented by one or more servers. The training device 1400 may differ greatly due to different configurations or performance, and may include one or more central processing units (central processing units, CPUs) 1414 (for example, one or more processors) and a memory 1432, one or more storage media 1430 (for example, one or more massive storage devices) that store an application 1442 or data 1444. The memory 1432 and the storage medium 1430 may be for temporary storage or permanent storage. A program stored in the storage medium 1430 may include one or more modules (not shown in the figure), and each module may include a series of instruction operations for the training device. Further, the central processing unit 1414 may be configured to communicate with the storage medium 1430, and perform, on the training device 1400, the series of instruction operations in the storage medium 1430.

The training device 1400 may further include one or more power supplies 1426, one or more wired or wireless network interfaces 1450, one or more input/output interfaces 1458, or one or more operating systems 1441, such as Windows ServerTM, Mac OS XTM, UnixTM, LinuxTM, and FreeBSDTM.

Specifically, the training device may perform steps 1001 to 1003 in the embodiment.

An embodiment of this application further provides a computer program product. When the computer program product runs on a computer, the computer is enabled to perform steps performed by the execution device or steps performed by the training device.

An embodiment of this application further provides a computer-readable storage medium. The computer-readable storage medium stores a program used for signal processing. When the program is run on a computer, the computer is enabled to perform steps performed by the execution device or steps performed by the training device.

The execution device, the training device, or the terminal device in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the execution device performs the data processing method described in the foregoing embodiment, or a chip in the training device performs the data processing method described in the foregoing embodiment. Optionally, the storage unit is a storage unit in the chip, for example, a register or a cache; or the storage unit may be a storage unit that is in a radio access device and that is located outside the chip, for example, a read-only memory (read-only memory, ROM), another type of static storage device that can store static information and instructions, or a random access memory (random access memory, RAM).

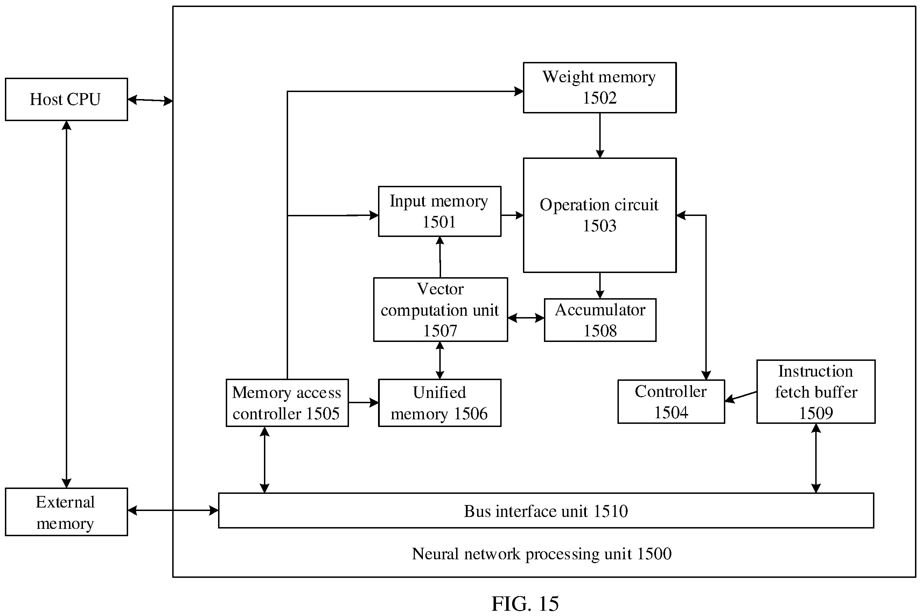

Specifically, FIG. 15 is a schematic diagram of a structure of a chip according to an embodiment of this application. The chip may be represented as a neural network processing unit NPU 1500. The NPU 1500 is mounted to a host CPU (Host CPU) as a coprocessor, and the host CPU allocates a task. A core part of the NPU is an operation circuit 1503, and a controller 1504 controls the operation circuit 1503 to extract matrix data in a memory and perform a multiplication operation.

The NPU 1500 may implement, through cooperation between internal components, the information recommendation method provided in the embodiment described in FIG. 4 and the model training method provided in the embodiment described in FIG. 10.

More specifically, in some implementations, the operation circuit 1503 in the NPU 1500 includes a plurality of processing engines (Process Engines, PE) inside. In some implementations, the operation circuit 1503 is a two-dimensional systolic array. The operation circuit 1503 may alternatively be a one-dimensional systolic array or another electronic circuit capable of performing mathematical operations such as multiplication and addition. In some implementations, the operation circuit 1503 is a general-purpose matrix processor.

For example, it is assumed that there is an input matrix A, a weight matrix B, and an output matrix C. The operation circuit fetches data corresponding to the matrix B from a weight memory 1502, and buffers the data on each PE in the operation circuit. The operation circuit fetches data of the matrix A from an input memory 1501 to perform a matrix operation on the matrix B, and stores an obtained partial result or an obtained final result of the matrix in an accumulator (accumulator) 1508.

A unified memory 1506 is configured to store input data and output data. Weight data is directly transferred to the weight memory 1502 through a direct memory access controller (Direct Memory Access Controller, DMAC) 1505. The input data is also transferred to the unified memory 1506 by using the DMAC.

A BIU is a bus interface unit, namely, a bus interface unit 1510, and is used for interaction between an AXI bus and the DMAC and between the AXI bus and an instruction fetch buffer (Instruction Fetch Buffer, IFB) 1509.

The bus interface unit (Bus Interface Unit, BIU for short) 1510 is used by the instruction fetch buffer 1509 to obtain instructions from an external memory, and is further used by the direct memory access controller 1505 to obtain original data of the input matrix A or the weight matrix B from the external memory.

The DMAC is mainly configured to transfer input data in the external memory DDR to the unified memory 1506, transfer weight data to the weight memory 1502, or transfer input data to the input memory 1501.

A vector calculation unit 1507 includes a plurality of operation processing units; and if necessary, performs further processing such as vector multiplication, vector addition, an exponential operation, a logarithmic operation, or value comparison on an output of the operation circuit 1503. The vector calculation unit 1507 is mainly configured to perform network calculation, such as batch normalization (batch normalization), pixel-level summation, and upsampling on a feature plane, at a non-convolutional/fully connected layer in a neural network.

In some implementations, the vector calculation unit 1507 can store a processed output vector in the unified memory 1506. For example, the vector calculation unit 1507 may apply a linear function or a non-linear function to the output of the operation circuit 1503, for example, perform linear interpolation on a feature plane extracted at a convolutional layer. For another example, the vector calculation unit 1507 may apply a linear function or a non-linear function to a vector of an accumulated value, to generate an activation value. In some implementations, the vector calculation unit 1507 generates a normalized value, a pixel-level summation value, or both. In some implementations, the processed output vector can be used as an activation input to the operation circuit 1503, for example, used in a subsequent layer in the neural network.

The instruction fetch buffer (instruction fetch buffer) 1509 connected to the controller 1504 is configured to store instructions used by the controller 1504.

The unified memory 1506, the input memory 1501, the weight memory 1502, and the instruction fetch buffer 1509 are all on-chip memories. The external memory is private for a hardware architecture of the NPU.

The processor mentioned above may be a general-purpose central processing unit, a microprocessor, an ASIC, or one or more integrated circuits for controlling program execution.

In addition, it should be noted that the described apparatus embodiments are only examples. The units described as separate parts may or may not be physically separate, and parts displayed as units may or may not be physical units, may be located in one place, or may be distributed on a plurality of network units. Some or all of the modules may be selected based on actual requirements to achieve the objectives of the solutions in embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Usually, any function implemented by a computer program may be easily implemented by using corresponding hardware. In addition, specific hardware structures used to implement a same function may be various, for example, an analog circuit, a digital circuit, or a dedicated circuit. However, in this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods in embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on the computer, the process or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state drive (Solid State Drive, SSD)), or the like.

**Claims**

1. A recommendation method, wherein the method comprises:

   obtaining a target feature vector, wherein the target feature vector is obtained by performing feature extraction on attribute information of both a target user and a target article;
   processing the target feature vector by using a recommendation model, to obtain recommendation information, wherein the recommendation information indicates a probability that the target user selects the target article, the recommendation model comprises a cross network (cross network), a deep network (deep network), and a target network, the cross network comprises a first cross layer (cross layer) and a second cross layer, and the deep network comprises a first deep layer (deep layer) and a second deep layer; the target network is used to perform fusion processing on a first intermediate output that is output by the first cross layer and a second intermediate output that is output by the first deep layer, to obtain a first fusion result, and the target network is further used to: process the first fusion result to obtain a first weight corresponding to the first cross layer and a second weight corresponding to the first deep layer, and weight the first fusion result with the first weight and the second weight separately, to obtain a first intermediate input and a second intermediate input; and the first intermediate input is input data of the second cross layer, and the second intermediate input is input data of the second deep layer; and
   when the recommendation information meets a preset condition, determining to recommend the target article to the target user.

2. The method according to claim 1, wherein the fusion processing comprises one of point-wise addition (point-wise addition), Hadamard product, concatenation, and attention mechanism based pooling.

3. The method according to claim 1 or 2, wherein the target network comprises a first feature adaptation network, and the first feature adaptation network is a fully-connected network, a squeeze-and-excitation network (squeeze-and-excitation network), an attention network, an SENet, or a gatenet (gatenet); and
   the processing the first fusion result comprises:
   processing the first fusion result by using the first feature adaptation network.

4. The method according to any one of claims 1 to 3, wherein the first intermediate output comprises M first feature vectors, the second intermediate output comprises M second feature vectors, the first fusion result comprises M third feature vectors, the first weight comprises a first weight value corresponding to each first feature vector, and the second weight comprises a second weight value corresponding to each second feature vector; and

the weighting the first fusion result with the first weight and the second weight separately comprises:

weighting each first feature vector of the M third feature vectors with a corresponding first weight value; and
weighting each second feature vector of the M third feature vectors with a corresponding second weight value.

5. The method according to any one of claims 1 to 4, wherein
the cross network further comprises a third cross layer, and the deep network further comprises a third deep layer;
the target network is further used to perform fusion processing on a third intermediate output that is output by the second cross layer and a fourth intermediate output that is output by the second deep layer, to obtain a second fusion result, and the target network is further used to: process the second fusion result to obtain a third weight corresponding to the second cross layer and a fourth weight corresponding to the second deep layer, and weight the second fusion result with the third weight and the fourth weight separately, to obtain a third intermediate input corresponding to the second cross layer and a fourth intermediate input corresponding to the second deep layer; and the third cross layer is configured to process the third intermediate input, and the third deep layer is configured to process the fourth intermediate input.

6. The method according to claim 5, wherein the target network comprises a second feature adaptation network, and the second feature adaptation network is a fully-connected network, a squeeze-and-excitation network (squeeze-and-excitation network), an attention network, an SENet, or a gatenet (gatenet); and
the processing the second fusion result comprises:
processing the second fusion result by using the second feature adaptation network.

7. The method according to any one of claims 1 to 6, wherein the target feature vector comprises a first network input and a second network input; and
the obtaining a target feature vector comprises:

obtaining an initial feature vector, wherein the initial feature vector is obtained by performing feature extraction on the attribute information of both the target user and the target article; and
processing the initial feature vector by using a third feature adaptation network, to obtain a fifth weight corresponding to the cross network and a sixth weight corresponding to the deep network, and weighting the initial feature vector with the fifth weight and the sixth weight separately, to obtain the first network input corresponding to the cross network and the second network input corresponding to the deep network, wherein the first network input is used as an input of the cross network, and the second network input is used as an input of the deep network.

8. The method according to claim 7, wherein the third feature adaptation network is a fully-connected network, a squeeze-and-excitation network, an attention network, an SENet or a gatenet.

9. The method according to any one of claims 1 to 8, wherein the user attribute comprises at least one of the following: a gender, an age, an occupation, income, a hobby, and an education degree.

10. The method according to any one of claims 1 to 9, wherein the article attribute comprises at least one of the following: an article name, a developer, an installation package size, a category, and a good rating.

11. A model training method, wherein the method comprises:

obtaining a target feature vector, wherein the target feature vector is obtained by performing feature extraction on attribute information of both a target user and a target article;
processing the target feature vector by using a first recommendation model, to obtain recommendation information, wherein the recommendation information indicates a probability that the target user selects the target article, the recommendation model comprises a cross network (cross network), a deep network (deep network), and a target network, the cross network comprises a first cross layer (cross layer) and a second cross layer, and the deep network comprises a first deep layer (deep layer) and a second deep layer; the target network is used to perform fusion processing on a first intermediate output that is output by the first cross layer and a second intermediate output that is output by the first deep layer, to obtain a first fusion result, and the target network is further used to: process the first fusion result to obtain a first weight corresponding to the first cross layer and a second weight corresponding to the first deep layer, and weight the first fusion result with the first weight and the second weight separately, to obtain a first intermediate input and a second intermediate input;

and the first intermediate input is input data of the second cross layer, and the second intermediate input is input data of the second deep layer; and

determining a loss based on the recommendation information and an actual selection result of the target user for the target article, and updating the first recommendation model based on the loss, to obtain a second recommendation model.

**12.** The method according to claim 11, wherein the fusion processing comprises one of point-wise addition (point-wise addition), Hadamard product, concatenation, and attention mechanism based pooling.

**13.** The method according to claim 11 or 12, wherein the target network comprises a first feature adaptation network, and the first feature adaptation network is a fully-connected network, a squeeze-and-excitation network (squeeze-and-excitation network), an attention network, an SENet, or a gatenet (gatenet); and

the processing the first fusion result comprises:

processing the first fusion result by using the first feature adaptation network.

**14.** The method according to any one of claims 11 to 13, wherein the first intermediate output comprises M first feature vectors, the second intermediate output comprises M second feature vectors, the first fusion result comprises M third feature vectors, the first weight comprises a first weight value corresponding to each first feature vector, and the second weight comprises a second weight value corresponding to each second feature vector; and

the weighting the first fusion result with the first weight and the second weight separately comprises:

weighting each first feature vector of the M third feature vectors with a corresponding first weight value; and
weighting each second feature vector of the M third feature vectors with a corresponding second weight value.

**15.** The method according to any one of claims 11 to 14, wherein

the cross network further comprises a third cross layer, and the deep network further comprises a third deep layer;
the target network is further used to perform fusion processing on a third intermediate output that is output by the second cross layer and a fourth intermediate output that is output by the second deep layer, to obtain a second fusion result, and the target network is further used to: process the second fusion result to obtain a third weight corresponding to the second cross layer and a fourth weight corresponding to the second deep layer, and weight the second fusion result with the third weight and the fourth weight separately, to obtain a third intermediate input corresponding to the second cross layer and a fourth intermediate input corresponding to the second deep layer; and the third cross layer is configured to process the third intermediate input, and the third deep layer is configured to process the fourth intermediate input.

**16.** The method according to claim 15, wherein the target network comprises a second feature adaptation network, and the second feature adaptation network is a fully-connected network, a squeeze-and-excitation network (squeeze-and-excitation network), an attention network, an SENet, or a gatenet (gatenet); and

the processing the second fusion result comprises:

processing the second fusion result by using the second feature adaptation network.

**17.** The method according to any one of claims 11 to 16, wherein the target feature vector comprises a first network input and a second network input; and

the obtaining a target feature vector comprises:

obtaining an initial feature vector, wherein the initial feature vector is obtained by performing feature extraction on the attribute information of both the target user and the target article; and
processing the initial feature vector by using a third feature adaptation network, to obtain a fifth weight corresponding to the cross network and a sixth weight corresponding to the deep network, and weighting the initial feature vector with the fifth weight and the sixth weight separately, to obtain the first network input corresponding to the cross network and the second network input corresponding to the deep network, wherein the first network input is used as an input of the cross network, and the second network input is used as an input of the deep network; and
the updating the first recommendation model based on the loss, to obtain a second recommendation model comprises:
updating the first recommendation model and the second feature adaptation network based on the loss, to obtain the second recommendation model and an updated second feature adaptation network.

**18.** A recommendation apparatus, wherein the apparatus comprises:

an obtaining module, configured to obtain a target feature vector, wherein the target feature vector is obtained by performing feature extraction on attribute information of both a target user and a target article;
a data processing module, configured to process the target feature vector by using a recommendation model, to obtain recommendation information, wherein the recommendation information indicates a probability that the target user selects the target article, the recommendation model comprises a cross network (cross network), a deep network (deep network), and a target network, the cross network comprises a first cross layer (cross layer) and a second cross layer, and the deep network comprises a first deep layer (deep layer) and a second deep layer; the target network is used to perform fusion processing on a first intermediate output that is output by the first cross layer and a second intermediate output that is output by the first deep layer, to obtain a first fusion result, and the target network is further used to: process the first fusion result to obtain a first weight corresponding to the first cross layer and a second weight corresponding to the first deep layer, and weight the first fusion result with the first weight and the second weight separately, to obtain a first intermediate input and a second intermediate input; and the first intermediate input is input data of the second cross layer, and the second intermediate input is input data of the second deep layer; and
a recommendation module, configured to: when the recommendation information meets a preset condition, determine to recommend the target article to the target user.

**19.** The apparatus according to claim 18, wherein the fusion processing comprises one of point-wise addition (point-wise addition), Hadamard product, concatenation, and attention mechanism based pooling.

**20.** The apparatus according to claim 18 or 19, wherein the target network comprises a first feature adaptation network, and the first feature adaptation network is a fully-connected network, a squeeze-and-excitation network (squeeze-and-excitation network), an attention network, an SENet, or a gatenet (gatenet); and
the data processing module is specifically configured to:
process the first fusion result by using the first feature adaptation network.

**21.** The apparatus according to any one of claims 18 to 20, wherein the first intermediate output comprises M first feature vectors, the second intermediate output comprises M second feature vectors, the first fusion result comprises M third feature vectors, the first weight comprises a first weight value corresponding to each first feature vector, and the second weight comprises a second weight value corresponding to each second feature vector; and
the data processing module is specifically configured to:

weight each first feature vector of the M third feature vectors with a corresponding first weight value; and
weight each second feature vector of the M third feature vectors with a corresponding second weight value.

**22.** The apparatus according to any one of claims 18 to 21, wherein
the cross network further comprises a third cross layer, and the deep network further comprises a third deep layer;
the target network is further used to perform fusion processing on a third intermediate output that is output by the second cross layer and a fourth intermediate output that is output by the second deep layer, to obtain a second fusion result, and the target network is further used to: process the second fusion result to obtain a third weight corresponding to the second cross layer and a fourth weight corresponding to the second deep layer, and weight the second fusion result with the third weight and the fourth weight separately, to obtain a third intermediate input corresponding to the second cross layer and a fourth intermediate input corresponding to the second deep layer; and the third cross layer is configured to process the third intermediate input, and the third deep layer is configured to process the fourth intermediate input.

**23.** The apparatus according to any one of claims 18 to 22, wherein the target feature vector comprises a first network input and a second network input; and
the obtaining module is specifically configured to:

obtain an initial feature vector, wherein the initial feature vector is obtained by performing feature extraction on the attribute information of both the target user and the target article; and
process the initial feature vector by using a third feature adaptation network, to obtain a fifth weight corresponding to the cross network and a sixth weight corresponding to the deep network, and weight the initial feature vector with the fifth weight and the sixth weight separately, to obtain the first network input corresponding to the cross network and the second network input corresponding to the deep network, wherein the first network input is used as an input of the cross network, and the second network input is used as an input of the deep network.

24. A model training apparatus, wherein the apparatus comprises:

an obtaining module, configured to obtain a target feature vector, wherein the target feature vector is obtained by performing feature extraction on attribute information of both a target user and a target article;
a data processing module, configured to process the target feature vector by using a first recommendation model, to obtain recommendation information, wherein the recommendation information indicates a probability that the target user selects the target article, the recommendation model comprises a cross network (cross network), a deep network (deep network), and a target network, the cross network comprises a first cross layer (cross layer) and a second cross layer, and the deep network comprises a first deep layer (deep layer) and a second deep layer; the target network is used to perform fusion processing on a first intermediate output that is output by the first cross layer and a second intermediate output that is output by the first deep layer, to obtain a first fusion result, and the target network is further used to: process the first fusion result to obtain a first weight corresponding to the first cross layer and a second weight corresponding to the first deep layer, and weight the first fusion result with the first weight and the second weight separately, to obtain a first intermediate input and a second intermediate input; and the first intermediate input is input data of the second cross layer, and the second intermediate input is input data of the second deep layer; and
a model training module, configured to: determine a loss based on the recommendation information and an actual selection result of the target user for the target article, and updating the first recommendation model based on the loss, to obtain a second recommendation model.

25. The apparatus according to claim 24, wherein the fusion processing comprises one of point-wise addition (point-wise addition), Hadamard product, concatenation, and attention mechanism based pooling.

26. The apparatus according to claim 24 or 25, wherein the target network comprises a first feature adaptation network, and the first feature adaptation network is a fully-connected network, a squeeze-and-excitation network (squeeze-and-excitation network), an attention network, an SENet, or a gatenet (gatenet); and
the data processing module is specifically configured to:
process the first fusion result by using the first feature adaptation network.

27. The apparatus according to any one of claims 24 to 26, wherein the first intermediate output comprises M first feature vectors, the second intermediate output comprises M second feature vectors, the first fusion result comprises M third feature vectors, the first weight comprises a first weight value corresponding to each first feature vector, and the second weight comprises a second weight value corresponding to each second feature vector; and
the data processing module is specifically configured to:

weight each first feature vector of the M third feature vectors with a corresponding first weight value; and
weight each second feature vector of the M third feature vectors with a corresponding second weight value.

28. The apparatus according to any one of claims 24 to 27, wherein the target feature vector comprises a first network input and a second network input; and
the obtaining module is specifically configured to:

obtain an initial feature vector, wherein the initial feature vector is obtained by performing feature extraction on the attribute information of both the target user and the target article; and
process the initial feature vector by using a third feature adaptation network, to obtain a fifth weight corresponding to the cross network and a sixth weight corresponding to the deep network, and weight the initial feature vector with the fifth weight and the sixth weight separately, to obtain the first network input corresponding to the cross network and the second network input corresponding to the deep network, wherein the first network input is used as an input of the cross network, and the second network input is used as an input of the deep network; and
the model training module is specifically configured to:
update the first recommendation model and the second feature adaptation network based on the loss, to obtain the second recommendation model and the updated second feature adaptation network.

29. A computing device, wherein the computing device comprises a memory and a processor, the memory stores code, and the processor is configured to obtain the code and perform the method according to any one of claims 1 to 17.

30. A computer storage medium, wherein the computer storage medium stores one or more instructions, and when the instruction is executed by one or more computers, the one or more computers are enabled to perform the method according to any one of claims 1 to 17.

31. A computer program product, comprising code, wherein when the code is executed, the method according to any one of claims 1 to 17 is performed.

Intelligent information chain

Intelligent product and industry application

| Translation/Text analysis/... | Speech/Vision/ Image/... |
|---|---|

| Data | Data processing: | Data training/ Machine learning/ Deep learning | Searching/ Inference/ Decision-making | ... |
|---|---|---|---|---|

| Infrastructure | Sensor | Intelligent chip | Basic platform | ... |
|---|---|---|---|---|

IT value chain

FIG. 1

FIG. 2

300

Data storage system 250

Execution device 210

Communication network

Local device 301

Local device 302

For example

FIG. 3

Offline training module

Recommendation model

Online prediction module

A user provides feedback for the displayed items

Select and sort items to be displayed

FIG. 4

EP 4 398 128 A1

Obtain a target feature vector, where the target feature vector is obtained by performing feature extraction on attribute information of both a target user and a target article — 501

Process the target feature vector by using a recommendation model, to obtain recommendation information, where the recommendation information indicates a probability that the target user selects the target article, the recommendation model includes a cross network, a deep network, and a target network, the cross network includes a first cross layer and a second cross layer, and the deep network includes a first deep layer and a second deep layer; the target network is used to perform fusion processing on a first intermediate output that is output by the first cross layer and a second intermediate output that is output by the first deep layer, to obtain a first fusion result, and the target network is further used to: process the first fusion result to obtain a first weight corresponding to the first cross layer and a second weight corresponding to the first deep layer, and weight the first fusion result with the first weight and the second weight separately, to obtain a first intermediate input and a second intermediate input; and the first intermediate input is input data of the second cross layer, and the second intermediate input is input data of the second deep layer — 502

When the recommendation information meets a preset condition, determine to recommend the target article to the target user — 503

FIG. 5

FIG. 6a

FIG. 6b

$$y = x_0 * x' * w + b + x$$

FIG. 7

FIG. 8

First feature
adaptation
network

Fusion
operation

Cross layer

Deep layer

Cross network

Deep network

FIG. 9

Obtain a target feature vector, where the target feature vector is obtained by performing feature extraction on attribute information of both a target user and a target article
1001

Process the target feature vector by using a recommendation model, to obtain recommendation information, where the recommendation information indicates a probability that the target user selects the target article, the recommendation model includes a cross network, a deep network, and a target network, the cross network includes a first cross layer and a second cross layer, and the deep network includes a first deep layer and a second deep layer; the target network is used to perform fusion processing on a first intermediate output that is output by the first cross layer and a second intermediate output that is output by the first deep layer, to obtain a first fusion result, and the target network is further used to: process the first fusion result to obtain a first weight corresponding to the first cross layer and a second weight corresponding to the first deep layer, and weight the first fusion result with the first weight and the second weight separately, to obtain a first intermediate input corresponding to the first cross layer and a second intermediate input corresponding to the first depth layer; and the second cross layer is used to process the first intermediate input, and the second deep layer is used to process the second intermediate input
1002

Determine a loss based on the recommendation information and an actual selection result of the target user for the target article, and update the first recommendation model based on the loss, to obtain a second recommendation model
1003

FIG. 10

1100

1101

Obtaining module

1102

Data processing
module

1103

Recommendation
module

FIG. 11

1200

1201

Obtaining module

1202

Data processing
module

1203

Model training
module

FIG. 12

1300

Execution device

Antenna                                                    Antenna

| Receiver 1301 | Transmitter 1302 |
|---|---|

Processor 1303

| Memory 1304 | Application processor 13031 | Communication processor 13032 |
|---|---|---|

FIG. 13

1400

Training device

1414 — Central processing unit

Power supply — 1426

Operating system — 1441

Data — 1444

Application — 1442

Storage medium — 1430

Memory — 1432

Wired or wireless network interface — 1450

Input/Output interface — 1458

FIG. 14

EP 4 398 128 A1

Host CPU

Weight memory
1502

Input memory
1501

Operation circuit
1503

Vector
computation unit
1507

Accumulator
1508

Memory access
controller 1505

Unified
memory 1506

Controller
1504

Instruction
fetch buffer
1509

External
memory

Bus interface unit 1510

Neural network processing unit 1500

FIG. 15

## INTERNATIONAL SEARCH REPORT

| International application No. |
|---|
| **PCT/CN2022/122528** |

**A. CLASSIFICATION OF SUBJECT MATTER**

G06F 16/9535(2019.01)i; G06N 3/08(2006.01)i

According to International Patent Classification (IPC) or to both national classification and IPC

**B. FIELDS SEARCHED**

Minimum documentation searched (classification system followed by classification symbols)

G06F; G06N; G06Q

Documentation searched other than minimum documentation to the extent that such documents are included in the fields searched

Electronic data base consulted during the international search (name of data base and, where practicable, search terms used)

CNPAT, CNKI; WPI; EPODOC; IEEE: 神经网络, 深度, 交叉, 平行, 融合, 向量, 特征, 推荐, 权重, neural network, deep, cross, parallel, fuse, vector, feature, recommend, weight

**C. DOCUMENTS CONSIDERED TO BE RELEVANT**

| Category* | Citation of document, with indication, where appropriate, of the relevant passages | Relevant to claim No. |
|---|---|---|
| A | CN 111553759 A (PING AN TECHNOLOGY (SHENZHEN) CO., LTD.) 18 August 2020 (2020-08-18)<br>description, paragraphs [0037]-[0174] | 1-31 |
| A | WO 2019223379 A1 (ALIBABA GROUP HOLDING LIMITED) 28 November 2019 (2019-11-28)<br>entire document | 1-31 |
| A | US 2020320382 A1 (ADOBE INC.) 08 October 2020 (2020-10-08)<br>entire document | 1-31 |
| A | CN 111382309 A (SHENZHEN UNIVERSITY) 07 July 2020 (2020-07-07)<br>entire document | 1-31 |
| A | US 2021279552 A1 (TENCENT TECHNOLOGY SHENZHEN COMPANY LIMITED) 09 September 2021 (2021-09-09)<br>entire document | 1-31 |

☐ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 November 2022** | **19 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/122528**

| Patent document cited in search report | | | Publication date (day/month/year) | Patent family member(s) | | | Publication date (day/month/year) |
|---|---|---|---|---|---|---|---|
| CN | 111553759 | A | 18 August 2020 | WO | 2021189976 | A1 | 30 September 2021 |
| WO | 2019223379 | A1 | 28 November 2019 | CN | 108711075 | A | 26 October 2018 |
| | | | | TW | 202004618 | A | 16 January 2020 |
| US | 2020320382 | A1 | 08 October 2020 | None | | | |
| CN | 111382309 | A | 07 July 2020 | WO | 2021179640 | A1 | 16 September 2021 |
| US | 2021279552 | A1 | 09 September 2021 | CN | 110046304 | A | 23 July 2019 |
| | | | | WO | 2020211566 | A1 | 22 October 2020 |

Form PCT/ISA/210 (patent family annex) (January 2015)

48

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111152705